(19) 

**Europäisches Patentamt**

**European Patent Office**

**Office européen des brevets**

(11) **EP 4 622 086 A1**

(12) **EUROPEAN PATENT APPLICATION**
published in accordance with Art. 153(4) EPC

(43) Date of publication:
**24.09.2025 Bulletin 2025/39**

(21) Application number: **22965716.8**

(22) Date of filing: **14.11.2022**

(51) International Patent Classification (IPC):
**H02M 7/48** $^{(2007.01)}$          **H02M 7/49** $^{(2007.01)}$

(52) Cooperative Patent Classification (CPC):
**H02M 7/48; H02M 7/49**

(86) International application number:
**PCT/JP2022/042266**

(87) International publication number:
**WO 2024/105739 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **YAMANAKA, Daisuke**
  **Tokyo 100-8310 (JP)**
• **KAJIYAMA, Takuya**
  **Tokyo 100-8310 (JP)**
• **NAKAMURA, Fuminori**
  **Tokyo 100-8310 (JP)**
• **KONO, Yoshiyuki**
  **Tokyo 100-8310 (JP)**

(74) Representative: **Witte, Weller & Partner
Patentanwälte mbB
Postfach 10 54 62
70047 Stuttgart (DE)**

(54) **POWER CONVERSION DEVICE**

(57)     In a power conversion device (1), in a case where a turn-on wait command for a bypass switch (BPS) is not received from a higher-level control device (3), an individual control unit (27) of each converter cell (7) turns on the bypass switch (BPS) when a voltage of a power storage element (24) exceeds a first overvoltage threshold (OV2), and in a case where the turn-on wait command for the bypass switch (BPS) is received, the individual control unit (27) turns on the bypass switch (BPS) when a voltage of the power storage element (24) exceeds a second overvoltage threshold (OV2H) higher than the first overvoltage threshold (OV2), instead of the first overvoltage threshold (OV2), and does not turn on the bypass switch (BPS) for the other reasons.

FIG.2

EP 4 622 086 A1

## Description

TECHNICAL FIELD

The present disclosure relates to a power conversion device.

BACKGROUND ART

Modular multilevel converters (MMCs) having a plurality of unit converters connected in cascade are known as typical power conversion devices for self-commutated high voltage direct current (HVDC) transmission. Hereinafter, the unit converters are also referred to as "converter cells" or "submodules" (SM). The converter cells usually each include a plurality of switching elements and a power storage element (typically, capacitor).

Modular multilevel converters have advantages of low loss and reduced harmonics over conventional two-level converters. However, since power storage elements are distributed over individual converter cells, it is important to maintain voltage of individual power storage elements.

In a normal operation state, control is performed such that the voltage of the power storage elements is kept in a constant range. However, a fault in a power system or a failure in a converter cell may lead to overvoltage (OV) of the power storage elements. In such a case, it is necessary to perform appropriate protection to prevent device destruction while maintaining the operation continuity to the maximum extent possible. Specific examples of overvoltage protection will be described below.

A power conversion device disclosed in Japanese Patent Laying-Open No. 2019-022313 (PTL 1) includes an overvoltage protection function and a fault determination circuit. When a power storage element of any one of converter cells has a voltage, for example, 1.5 times as large as a defined maximum voltage, the overvoltage protection function bypasses the converter cell. When the fault determination circuit determines that a fault such as ground fault has occurred in a power system, the operation of each converter cell is stopped by gate blocking before the capacitor voltage rises to the operating voltage of the overvoltage protection function.

A power conversion device disclosed in Japanese Patent Laying-Open No. 2017-175740 (PTL 2) has a control circuit that stops the operation of each converter cell by gate blocking when the capacitor voltage of any converter cell is equal to or higher than an overvoltage level. Further, when the number of converter cells with a voltage value equal to or higher than a voltage rise level that is lower than the overvoltage level exceeds a predetermined number, the control circuit stops the operation of each converter cell by gate blocking. Further, when the capacitor voltage of any converter cell is equal to or higher than a bypass level between the overvoltage level and the voltage rise level, the control circuit bypasses the applicable converter cell.

In the power conversion device disclosed in Japanese Patent Laying-Open No. 2019-213382 (PTL 3), a higher-level control device calculates the average value of capacitor voltage of each converter cell and outputs the calculated average value to the control unit of each converter cell. The control unit of each converter cell determines that a capacitor voltage is abnormal if the difference between a detection result of capacitor voltage and the average value is equal to or greater than a threshold, and turns on a bypass switch to bypass between input/output terminals.

CITATION LIST

PATENT LITERATURE

PTL 1: Japanese Patent Laying-Open No. 2019-022313
PTL 2: Japanese Patent Laying-Open No. 2017-175740
PTL 3: Japanese Patent Laying-Open No. 2019-213382

SUMMARY OF INVENTION

TECHNICAL PROBLEM

It is possible that the protection operation in overvoltage of the power storage element of each converter cell is performed based on a command from a higher-level control device of the power conversion device. However, the processing load on the higher-level control device may increase, or the command from the higher-level control device to each converter cell may be delayed at the time of abnormality. It is therefore desirable that the determination as to whether to perform the above protection operation is shared between the higher-level control device and the individual control unit provided in each converter cell.

In the case of the power conversion devices disclosed in Japanese Patent Laying-Open No. 2019-022313 (PTL 1) and Japanese Patent Laying-Open No. 2017-175740 (PTL 2), the problems described above may arise because the higher-level control device has to perform all protection operations.

On the other hand, in the case of Japanese Patent Laying-Open No. 2019-213382 (PTL 3), whether a converter cell has overvoltage due to a failure of a converter cell can be determined locally by each individual converter cell. However, this literature does not consider in particular a case where a capacitor voltage rises in the entire power converter due to a fault of a power system, and does not show how the higher-level control device and the individual control unit of each converter cell are coordinated.

Moreover, the problem with the case where the determination as to whether to turn on the bypass switch is committed to the individual control system for each converter cell is that when a severe voltage fault occurs, the bypass switches may be turned on in a chain reaction manner in many converter cells. The main purpose of the bypass switch is essentially to continue operation of the system at the time of a failure of a converter cell. When the bypass switch is turned on, it is necessary to check the health of the contact after manual opening. In a system that turns on the contact by ignition of explosive, the bypass switch needs to be replaced. Therefore, if the bypass switches are turned on unnecessarily in a chain reaction manner, it takes time to restart, resulting in lower availability of the system. In a case where turning on the bypass switch does not result in operation continuation, the bypass switch basically should not be turned on. Another purpose of the bypass switch is to prevent dielectric breakdown of the power storage element of the converter cell due to overvoltage at the time of a system failure. However, this is aimed to prevent fault propagation to other converter cells and is a secondary purpose which is different from the main purpose in the condition for turning on the bypass switch.

The present disclosure is made in consideration of the above problems. An object of the present disclosure is to implement protection operation fast and reliably through coordination between the higher-level control device and the individual control unit of each converter cell when the power storage element of any converter cell has overvoltage.

SOLUTION TO PROBLEM

A power conversion device according to an embodiment includes a power converter including an arm circuit including a plurality of converter cells connected in cascade, and a higher-level control device to control the power converter. Each of the converter cells includes a first input/output terminal and a second input/output terminal, a bridge circuit including a plurality of semiconductor switching elements, a power storage element connected to the first input/output terminal and the second input/output terminal through the bridge circuit, a bypass switch connecting the first input/output terminal and the second input/output terminal to each other, and an individual control unit connected to the higher-level control device through a signal line. In a case where a turn-on wait command for the bypass switch is not received from the higher-level control device, the individual control unit turns on the bypass switch when a voltage of the power storage element exceeds a first overvoltage threshold. In a case where the turn-on wait command for the bypass switch is received, the individual control unit performs gate blocking to turn off the semiconductor switching elements, and turns on the bypass switch when a voltage of the power storage element exceeds a second overvoltage threshold higher than the first overvoltage threshold, instead of the first overvoltage threshold.

ADVANTAGEOUS EFFECTS OF INVENTION

According to the above embodiment, unnecessary turning-on of the bypass switches in a chain reaction manner can be prevented by a turn-on wait command from the higher-level control device, and turning-on of the bypass switch in a case of extreme overvoltage can be determined by the individual control unit. As a result, the protection operation can be implemented fast and reliably through coordination between the higher-level control device and the individual control unit of each converter cell when the power storage element of each converter cell has overvoltage.

BRIEF DESCRIPTION OF DRAWINGS

Fig. 1 is an overall configuration diagram of a power conversion device according to a first embodiment.

Fig. 2 is a circuit diagram showing an example of a submodule that constitutes each leg circuit in Fig. 1.

Fig. 3 is a block diagram showing an exemplary hardware configuration of a higher-level control device.

Fig. 4 is a flowchart showing an overall procedure of an overvoltage protection method for a power storage element.

Fig. 5 is a flowchart showing a detailed procedure of a short-time gate blocking process in Fig. 4.

Fig. 6 is a flowchart showing a detailed procedure of a long-time gate blocking process in Fig. 4.

Fig. 7 is a flowchart for explaining a specific example of a criterion for determining a serious failure.

Fig. 8 is a diagram for explaining a configuration of a duplicated control device.

Fig. 9 is a flowchart showing a detailed procedure of a bypass switch turn-on process 1 in Fig. 4.

Fig. 10 is a flowchart showing a procedure of a system stop process in Fig. 9.

Fig. 11 is a flowchart showing a detailed procedure of a bypass switch turn-on process 2 in Fig. 4.

Fig. 12 is a table showing levels of threshold voltages for determining overvoltage described with reference to Fig. 4 to Fig. 11, protection operations associated with the threshold voltages, and their purposes.

Fig. 13 is a block diagram for explaining a method of generating a voltage command value for each arm circuit.

Fig. 14 is a diagram showing a high voltage direct current transmission system.

Fig. 15 is a flowchart showing an example of a start process procedure for the power conversion device in Fig. 14.

Fig. 16 is a flowchart showing an example of a stop process procedure for the power conversion device in Fig. 14.

Fig. 17 is a flowchart showing a modification of processing by the higher-level control device in the overvoltage protection process shown in Fig. 4.

DESCRIPTION OF EMBODIMENTS

Embodiments will be described in detail below with reference to the drawings. The same or corresponding parts are denoted by the same reference signs and a description thereof is not repeated.

First Embodiment

[Overall Configuration of Power Conversion Device]

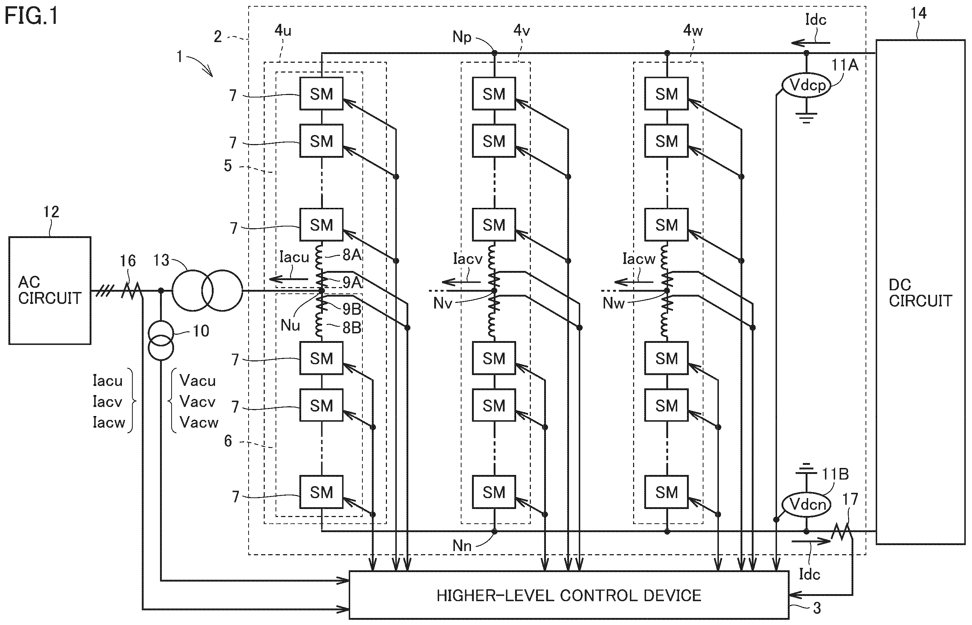

Fig. 1 is an overall configuration diagram of a power conversion device 1 according to a first embodiment. Referring to Fig. 1, power conversion device 1 is constituted of a modular multilevel converter including a plurality of converter cells 7 connected in cascade with each other. Power conversion device 1 performs power conversion between a DC circuit 14 and an AC circuit 12. Power conversion device 1 includes a power converter 2 and a higher-level control device 3.

Power converter 2 includes a plurality of leg circuits 4u, 4v, and 4w (referred to as leg circuit 4 when they are collectively referred to or any one of them is referred to) connected in parallel with each other between a positive electrode DC terminal (that is, high potential-side DC terminal) Np and a negative electrode DC terminal (that is, low potential-side DC terminal) Nn.

Leg circuit 4 is provided for each of a plurality of phases of alternating current. Leg circuit 4 is connected between AC circuit 12 and DC circuit 14 and performs power conversion between these circuits. Fig. 1 illustrates a case where AC circuit 12 is a three-phase AC system, and three leg circuits 4u, 4v, and 4w are provided respectively corresponding to U phase, V phase, and W phase.

AC input terminals Nu, Nv, and Nw respectively provided for leg circuits 4u, 4v, and 4w are connected to AC circuit 12 through a transformer 13. AC circuit 12 is, for example, an AC power system including an AC power source. In Fig. 1, for simplification of illustration, the connection between AC input terminals Nv, Nw and transformer 13 is not shown.

High potential-side DC terminal Np and low potential-side DC terminal Nn connected in common to leg circuits 4 are connected to DC circuit 14. DC circuit 14 is, for example, a DC power system including a DC power transmission grid or a DC terminal of another power conversion device. In the latter case, two power conversion devices are coupled to configure a back-to-back (BTB) system for connecting AC power systems different, for example, in rated frequency.

AC circuit 12 may be connected through an interconnecting reactor, instead of using transformer 13 in Fig. 1. Further, instead of AC input terminals Nu, Nv, and Nw, leg circuits 4u, 4v, and 4w may be provided with respective primary windings, and leg circuits 4u, 4v, and 4w may be connected in terms of alternating current to transformer 13 or the interconnecting reactor through secondary windings magnetically coupled to the primary windings. In this case, the primary windings may be reactors 8A and 8B described below. Specifically, leg circuits 4 are electrically (that is, in terms of direct current or alternating current) connected to AC circuit 12 through connections provided for leg circuits 4u, 4v, and 4w, such as AC input terminals Nu, Nv, and Nw or the primary windings.

Leg circuit 4u includes an upper arm circuit 5 from high potential-side DC terminal Np to AC input terminal Nu and a lower arm circuit 6 from low potential-side DC terminal Nn to AC input terminal Nu. AC input terminal Nu that is a connection point between upper arm circuit 5 and lower arm circuit 6 is connected to transformer 13. High potential-side DC terminal Np and low potential-side DC terminal Nn are connected to DC circuit 14. Upper arm circuit 5 and lower arm circuit 6 are collectively referred to as arm circuit. Leg circuits 4v and 4w have a similar configuration, and hereinafter the configuration of leg circuit 4u is explained as a representative example.

Upper arm circuit 5 includes a plurality of converter cells 7 connected in cascade and a reactor 8A. Converter cells 7 and reactor 8A are connected in series. Similarly, lower arm circuit 6 includes a plurality of converter cells 7 connected in cascade and a reactor 8B. Converter cells 7 and reactor 8B are connected in series.

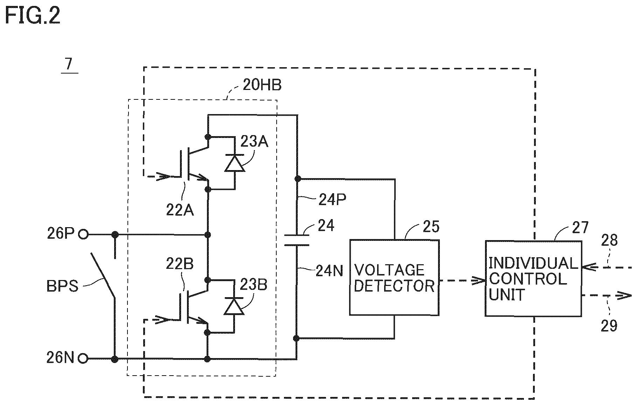

In the following description, the number of converter cells 7 included in each of upper arm circuit 5 and lower arm circuit 6 is denoted as Ncell+Rcell. Here, Ncell≥2 and Rcell≥1. Ncell is the minimum number of converter cells 7 necessary for operation, and Rcell is the number of redundant cells. However, Ncell+Rcell converter cells 7 operate together and therefore the redundant cells and the other cells are not distinguished from each other. If one of Ncell+Rcell converter cells 7 is failed, the failed cell is short-circuited by turning on its bypass switch BPS (see Fig. 2). Thus, if Rcell converter cells 7 among Ncell+Rcell converter cells 7 are failed, the remaining number of redundant cells is zero. If another converter cell 7 is failed, the number of converter cells 7 included in the corresponding arm is less than Ncell, and power converter 2 is no longer usable.

Reactor 8A may be inserted at any position in upper arm circuit 5 of leg circuit 4u, and reactor 8B may be inserted at any position in lower arm circuit 6 of leg circuit 4u. A plurality of reactors 8A and a plurality of reactors 8B may be provided. The inductances of the reactors may be different from each other. Only reactor 8A of upper arm circuit 5 or only reactor 8B of lower arm circuit 6 may be provided. The transformer connection may be adjusted to cancel the magnetic flux of DC component current, and leakage reactance of the transformer may act on AC component current, as an alternative to the reactor. The provision of reactors 8A and 8B can suppress abrupt increase of fault current at the time of a fault in AC circuit 12 or DC circuit 14.

Power conversion device 1 further includes an AC voltage detector 10, an AC current detector 16, DC voltage detectors 11A and 11B, arm current detectors 9A and 9B provided for each leg circuit 4, and a DC current detector 17, as detectors for measuring the quantity of electricity (current, voltage, etc.) used in control. Signals detected by these detectors are input to higher-level control device 3.

In Fig. 1, signal lines of signals input from the detectors to higher-level control device 3 and signal lines of signals input and output between higher-level control device 3 and converter cells 7 are depicted partially collectively for the sake of ease of illustration, but, in actuality, they are provided individually for each detector and each converter cell 7. Signal lines between each converter cell 7 and higher-level control device 3 may be provided separately for transmission and reception. The signal lines are formed with, for example, optical fibers.

Each detector will be specifically described below.

AC voltage detector 10 detects U-phase AC voltage Vacu, V-phase AC voltage Vacv, and W-phase AC voltage Vacw of AC circuit 12. In the following description, Vacu, Vacv, and Vacw may be collectively referred to as Vac.

AC current detector 16 detects U-phase AC current Iacu, V-phase AC current Iacv, and W-phase AC current Iacw of AC circuit 12. In the following description, Iacu, Iacv, and Iacw may be collectively referred to as Iac.

DC voltage detector 11A detects DC voltage Vdcp at high potential-side DC terminal Np connected to DC circuit 14. DC voltage detector 11B detects DC voltage Vdcn at low potential-side DC terminal Nn connected to DC circuit 14. The difference between DC voltage Vdcp and DC voltage Vdcn is defined as DC voltage Vdc. DC current detector 17 detects DC current Idc flowing through high potential-side DC terminal Np or low potential-side DC terminal Nn.

Arm current detectors 9A and 9B provided in leg circuit 4u for U phase respectively detect upper arm current Ipu flowing through upper arm circuit 5 and lower arm current Inu flowing through lower arm circuit 6. Arm current detectors 9A and 9B provided in leg circuit 4v for V phase respectively detect upper arm current Ipv and lower arm current Inv. Arm current detectors 9A and 9B provided in leg circuit 4w for W phase respectively detect upper arm current Ipw and lower arm current Inw. In the following description, upper arm currents Ipu, Ipv, and Ipw may be collectively referred to as upper arm current Iarmp, lower arm currents Inu, Inv, Inw may be collectively referred to as lower arm current Iarmn, and upper arm current Iarmp and lower arm current Iarmn may be collectively referred to as Iarm.

[Configuration Example of Submodule]

Fig. 2 is a circuit diagram showing an example of a submodule that constitutes each leg circuit in Fig. 1. Converter cell 7 shown in Fig. 1 includes a half bridge-type conversion circuit 20HB, a power storage element 24 serving as a power storage element, a voltage detector 25, and an individual control unit 27. Conversion circuit 20HB is also referred to as bridge circuit 20HB.

Half bridge-type conversion circuit 20HB includes switching elements 22A and 22B connected in series with each other, and diodes 23A and 23B. Diodes 23A and 23B are connected in anti-parallel (that is, in parallel and in reverse bias direction) with switching elements 22A and 22B, respectively. Hereinafter, switching elements 22A and 22B and diodes 23A and 23B are referred to as switching element 22 and diode 23, respectively, when they are collectively referred to or any one of them is referred to.

Power storage element 24 is connected in parallel with the series connection circuit of switching elements 22A and 22B and holds a DC voltage. A DC capacitor is typically used as power storage element 24. The connection node of switching elements 22A and 22B is connected to a high potential-side input/output terminal 26P. The connection node of switching element 22B and power storage element 24 is connected to a low potential-side input/output terminal 26N.

Typically, input/output terminal 26P is connected to input/output terminal 26N of converter cell 7 adjacent on the positive electrode side. Input/output terminal 26N is connected to input/output terminal 26P of converter cell 7 adjacent on the negative electrode side.

Self-turn-off switching elements capable of controlling both the on operation and the off operation are used for switching elements 22A and 22B. Switching elements 22A and 22B are, for example, insulated gate bipolar transistors (IGBTs) or gate commutated turn-off thyristors (GCTs).

The conversion circuit of converter cell 7 is not limited to half bridge-type conversion circuit 20HB as described above. For example, converter cell 7 may be configured using a full bridge-type conversion circuit or a three quarter bridge-type conversion circuit.

A bypass switch BPS is connected between input/output terminals 26P and 26N. Bypass switch BPS is a switch configured to short-circuit both ends of switching element 22B by closing a contact and allows fault current to pass. In other words, bypass switch BPS short-circuits converter cell 7 to protect each element (switching elements 22A and 22B, diodes 23A and 23B, and power storage element 24) included in converter cell 7 from overcurrent that occurs at the time of a fault.

Bypass switch BPS is also used to short-circuit converter cell 7 when each element in this converter cell 7 is failed. With this configuration, even when any converter cell 7 among a plurality of converter cells 7 is failed, another converter cell 7 can be used to allow power conversion device 1 to continue operation.

When bypass switch BPS is turned on, it is necessary to check the health of the contact after manual opening. In a system that turns on the contact by ignition of explosive, the bypass switch needs to be replaced. Therefore, in a case where turning on the bypass switch does not result in operation continuation of the system, the bypass switch basically should not be turned on. It is the essential purpose of using bypass switch BPS to short-circuit the failed converter cell 7 to enable operation continuation.

Voltage detector 25 detects a voltage between both ends 24P and 24N (that is, capacitor voltage) of power storage element 24.

Individual control unit 27 generates a gate signal for controlling on and off of switching elements 22A and 22B in accordance with phase shift PWM control, based on a control command 28 received from higher-level control device 3. Individual control unit 27 further transmits a signal 29 including abnormality determination information of converter cell 7 and a capacitor voltage detected by voltage detector 25 to higher-level control device 3.

Typically, individual control unit 27 performs control to bring one of switching elements 22A and 22B to the on state and the other to the off state during normal operation (that is, when zero voltage or a positive voltage is output between input/output terminals 26P and 26N). When switching element 22A is in the on state and switching element 22B is in the off state, the voltage between both ends of power storage element 24 is applied between input/output terminals 26P and 26N. Conversely, when switching element 22A is in the off state and switching element 22B is in the on state, the voltage between input/output terminals 26P and 26N is 0 V.

Converter cell 7 can output zero voltage and a positive voltage dependent on the voltage of power storage element 24 by alternately bringing switching elements 22A and 22B to the on state. Diodes 23A and 23B are provided for protection when a reverse voltage is applied to switching elements 22A and 22B.

Converter cell 7 has a power supply circuit (not shown) to generate a drive voltage of individual control unit 27 based on voltage of power storage element 24. Individual control unit 27 is therefore unable to operate when the voltage of power storage element 24 is low.

The above individual control unit 27 may be configured with a dedicated circuit such as an application specific integrated circuit (ASIC) or may be configured using a field programmable gate array (FPGA) or the like. Alternatively, it may be configured based on a computer including a central processing unit (CPU) and a memory, or may be configured with a combination of two or more of the above.

[Hardware Configuration Example of Control Device]

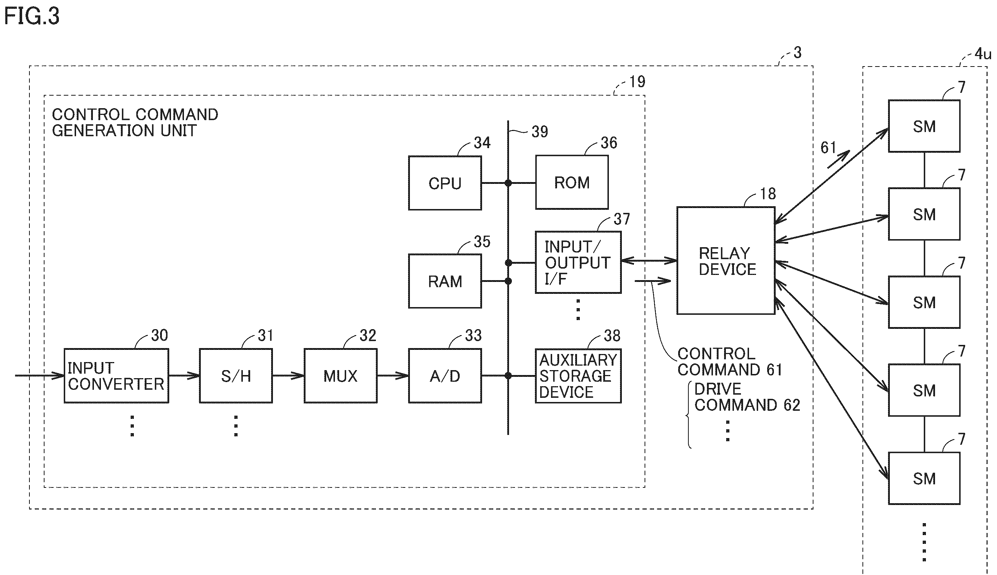

Fig. 3 is a block diagram showing an exemplary hardware configuration of the control device. Fig. 3 illustrates an example in which higher-level control device 3 is configured with a computer. Fig. 3 further illustrates an example in which the computer (that is, a control command generation unit 19) is connected to each converter cell 7 through a relay device 18.

Referring to Fig. 3, higher-level control device 3 includes control command generation unit 19 and relay device 18. Control command generation unit 19 generates a control command 61 for controlling the operation of each converter cell 7 and outputs the generated control command to each converter cell 7 through relay device 18. Control command 61 includes a variety of control commands for controlling each converter cell 7. For example, control command 61 includes a drive command 62 including a voltage command and a synchronization command. The voltage command is an output voltage command value for upper arm 5 and an output voltage command value for lower arm 6 in each leg circuit 4u, 4v, 4w. The synchronization command is a command for synchronizing the operation of each converter cell 7.

Control command generation unit 19 includes one or more input converters 30, one or more sample hold (S/H) circuits 31, a multiplexer (MUX) 32, and an analog-to-digital (A/D) converter 33. Control command generation unit 19 further includes one or more CPUs 34, random access memory (RAM) 35, and read only memory (ROM) 36. Control command generation unit 19 further includes one or more input/output interfaces (I/F) 37, an auxiliary storage device 38, and a bus 39 connecting the components above to each other.

Input converter 30 includes an auxiliary transformer (not shown) for each input channel. Each auxiliary transformer converts a detection signal from each electrical quantity detector in Fig. 1 into a signal at a voltage level suitable for subsequent signal processing.

Sample hold circuit 31 is provided for each input converter 30. Sample hold circuit 31 samples and holds a signal representing the electrical quantity received from the corresponding input converter 30 at a predetermined sampling frequency.

Multiplexer 32 successively selects the signals held by a plurality of sample hold circuits 31. A/D converter 33 converts a signal selected by multiplexer 32 into a digital value. A plurality of A/D converters 33 may be provided to perform A/D conversion of detection signals of a plurality of input channels in parallel.

CPU 34 controls the entire control command generation unit 19 and performs computational processing under instructions of a program. RAM 35 as a volatile memory and ROM 36 as a nonvolatile memory are used as a main memory of CPU 34. ROM 36 stores a program, setting values for signal processing, and the like. Auxiliary storage device 38 is a nonvolatile memory having a larger capacity than ROM 36 and stores a program, data such as electrical quantity detected values, and the like.

Input/output interface 37 is an interface circuit for communication between CPU 34 and an external device.

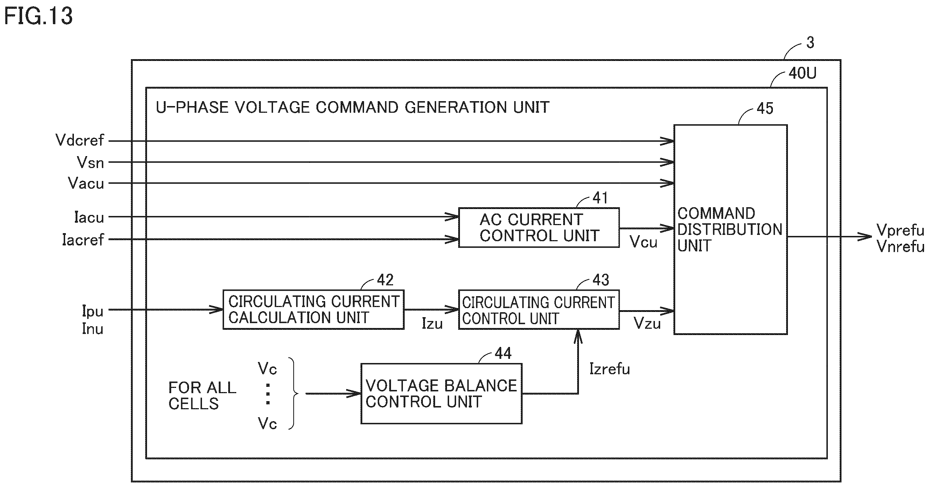

Unlike the example of Fig. 3, at least a part of control command generation unit 19 may be configured using circuitry such as an FPGA and an ASIC. For example, the function of each functional block illustrated in Fig. 13 described later may be configured based on the computer illustrated in Fig. 3 or may be at least partially configured with circuitry such as an FPGA and an ASIC. At least a part of the function of each functional block may be configured with an analog circuit.

Relay device 18 is connected between control command generation unit 19 and each converter cell 7. Relay device 18 is connected to each converter cell 7 through a star-type network. Typically, relay device 18 is configured with a dedicated circuit and may be partially or entirely configured with an FPGA.

Relay device 18 transmits a control command received from control command generation unit 19 to each converter cell 7. Further, relay device 18 receives the value of voltage of power storage element 24 (also referred to as capacitor voltage Vc) measured by voltage detector 25 of converter cell 7. Relay device 18 may calculate the average value <Vc>, maximum value, minimum value, and the like of capacitor voltages Vc of all converter cells 7, instead of CPU 34 of control command generation unit 19. Thus, even when there are many cells, increase in communication volume and processing load can be suppressed, thereby enabling fast and low-latency communication with a fewer communication lines.

[Basic Handling Policy for Overvoltage of Power Storage Element]

Hereinafter, the basic handling policy for overvoltage of the power storage element provided in each converter cell in the power converter having the above configuration will be described. Specifically, it is necessary to handle the following cases (1) to (3).

(1) A case where a fault or a disturbance occurs in the AC system or the DC system

In this case, current flowing from the power system into power converter 2 may increase the voltage of power storage element 24 of each converter cell in the entire arm to cause overvoltage. When a synthetic voltage which is a voltage of power storage element 24 plus a surge voltage caused by switching of switching element 22 exceeds a withstand voltage of an element such as switching element 22 and power storage element 24, the element may be broken. When the synthetic voltage exceeds the element withstand voltage, the switching of switching element 22 is unable to be resumed, so that the operation of power converter 2 is unable to be resumed until the voltage of power storage element 24 is lowered by discharging, resulting in a stop for a long time and deterioration of operation continuity. It is therefore necessary to suppress inflow current by gate-blocking all converter cells 7 that constitute power converter 2 before the synthetic voltage reaches the above limit.

As used herein gate blocking refers to stopping the switching operation of all switching elements 22 that constitute converter cells 7 into the off state. The reason why gate blocking can suppress inflow of current from AC circuit 12 and DC circuit 14 is as follows.

When each converter cell 7 is gate-blocked, power storage elements 24 of each arm circuit 5, 6 are connected in series through diodes 23. Therefore, in order to allow current to flow from DC circuit 14 or AC circuit 12 into power converter 2, a voltage exceeding the total sum of capacitor voltages on the current path needs to be applied to power converter 2.

Specifically, letting the permissible rising rate of capacitor voltage be y, and the rated AC modulation ratio of PWM control be Mac, an AC voltage having a value higher than clamping voltage which is y/Mac times as high as the AC rated voltage needs to be applied to power converter 2 in order to inject current from AC circuit 12 to power converter 2. As an example, if y=1.3 and Mac=0.8, an AC voltage having a value higher than 1.625 times as high as the AC rated voltage is necessary. In order to inject current from DC circuit 14 into power converter 2, a DC voltage having a value higher than clamping voltage which is $2 \times \gamma$ times as high as the DC rated voltage needs to be applied to power converter 2. As an example, if y=1.3, a DC voltage having a value higher than 2.6 times as high as the DC rated voltage is necessary. In the present disclosure, a case where a voltage exceeding the above clamping voltage is applied to power converter 2 in consideration of a necessary likelihood is referred to as a severe fault.

(2) A case where a failure of a single converter cell 7 causes overvoltage of a single power storage element

Individual control unit 27 of each converter cell 7 monitors a failure of converter cell 7 by a variety of methods. For example, individual control unit 27 monitors whether the voltage of power storage element 24 is overvoltage (OV) or undervoltage (UV). Further, individual control unit 27 monitors whether control command 28 is regularly received from higher-level control device 3. The presence or absence of most failures can be identified by voltage abnormality of power storage element 24.

When a failure of a single converter cell 7 causes overvoltage of power storage element 24, the operation of power converter 2 can be continued by turning on (that is, closing) bypass switch BPS of the converter cell 7. When it takes time to turn on bypass switch BPS, compared with the voltage rising rate of power storage element 24, the voltage rising rate of power storage element 24 can be suppressed by gate blocking of all arms, including the failed converter cell 7.

(3) A case where the voltage of the power storage element of each converter cell rises at the time of a severe fault of the power system

As described in the case (1), when a fault occurs in the power system, inflow of current to power converter 2 is suppressed by gate blocking. However, in a case of a severe fault, even if gate blocking is carried out, current further flows into power converter 2 so that the voltage of each power storage element 24 further rises. Consequently, even if switching element 22 is not switched, the capacitor voltage may exceed a withstand voltage of switching element 22, power storage element 24, and a bus bar, causing dielectric breakdown. Then, in order to prevent fault propagation to other converter cells due to breakage of a converter cell, bypass switch BPS is turned on for converter cell 7 that reaches the withstand voltage.

In the cases of (1) to (3), for which handling methods are different, detection and identification of each case is important. Each case could be identified if all of the cases are detected by higher-level control device 3. However, if so, the processing load on higher-level control device 3 increases, resulting in delay in protection processing depending on the communication performance between higher-level control device 3 and each converter cell 7. In addition, the reliability is reduced due to communication error. On the other hand, the local protection processing by each converter cell 7 is limited in available information, making it difficult to identify the cases (1) to (3). For example, the cases (1) and (2) cannot be distinguished from each other only with the voltage of its own power storage element 24 of each converter cell 7.

Therefore, a combination of the protection processing in higher-level control device 3 and the local protection processing in each converter cell 7 is important. An appropriate combination of the protection processing in the higher-level system and the protection processing in the local system can alleviate the processing load on higher-level control device 3, accelerate the protection processing, and ensure the reliability (that is, robustness).

[Specific Protection Processing Method for Overvoltage of Power Storage Element]

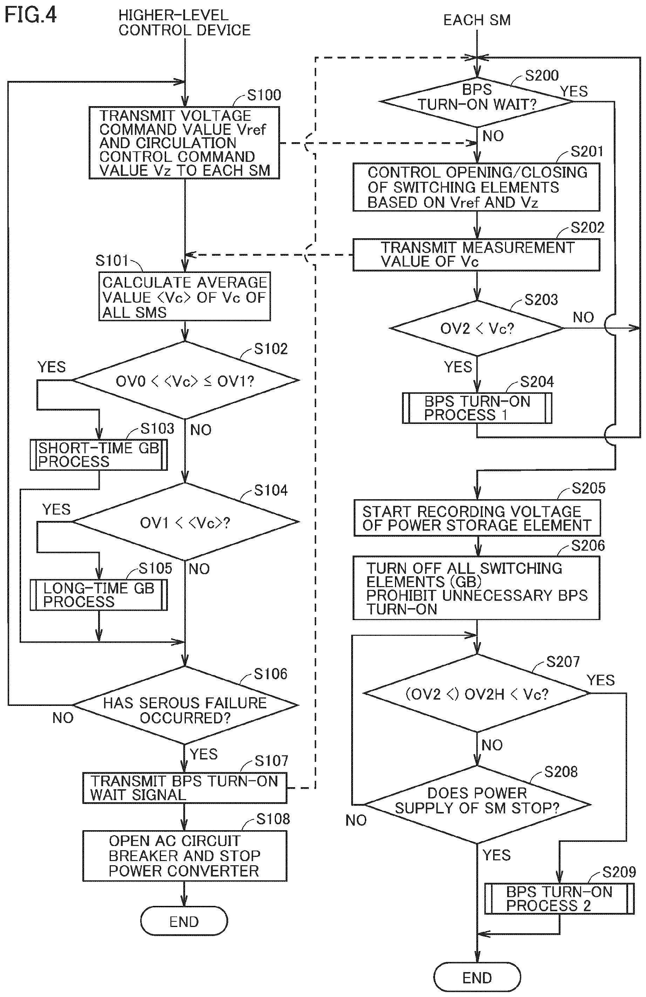

Referring to Fig. 4 to Fig. 12, overvoltage protection for a power storage element in the present embodiment will be described below.

As will be detailed below, the overvoltage protection method for a power storage element according to the present embodiment combines the higher-level processing and the local processing in each converter cell 7 in consideration of alleviating the processing load on higher-level control device 3, the speed of protection processing, and robustness. The case (1) is handled by higher-level control device 3, and the cases (2) and (3) are handled by the local processing in each converter cell 7.

Fig. 4 is a flowchart showing an overall procedure of the overvoltage protection method for a power storage element. Referring to Fig. 4, in a normal state in which a failure does not occur in either the power system or converter cell 7, higher-level control device 3 calculates a voltage command value Vref based on respective measurement values of DC voltage, DC current, AC voltage, AC current, and arm current, and transmits the calculated voltage command value Vref to each converter cell 7 (S100).

Further, higher-level control device 3 calculates circulating current Iz of each phase based on the measurement values of arm current and DC current and generates a circulating current command value Izref so as to reduce variations in capacitor voltage Vc based on the measurement values of capacitor voltages Vc of all the cells. Higher-level control device 3 calculates a circulation control command value Vz of each phase for controlling the calculated circulating current to follow the circulating current command value and transmits the calculated circulation control command value Vz to each converter cell 7 (S100).

Individual control unit 27 of each converter cell 7 controls the opening/closing of switching element 22 by phase shift pulse width modulation (PWM) based on voltage command value Vref and circulation control command value Vz received from higher-level control device 3 (S201).

Specifically, individual control unit 27 generates a gate signal for controlling the on/off of switching elements 22A and 22B by modulating voltage command value Vref with a carrier signal (for example, triangular wave). Further, individual control unit 27 changes the pulse width of the gate signal in accordance with circulation control command value Vz. For example, the greater circulation control command value Vz, the larger the pulse width of the gate signal is set. Thus, the circulating current can be controlled.

Here, the phase shift PWM control is that the timings (that is, phases) of respective PWM signals output to a plurality of converter cells 7 that constitute the same arm circuit (upper arm circuit 5 or lower arm circuit 6) are shifted from each other. This is known to reduce harmonic components included in the synthetic voltage of output voltage of each converter cell 7.

Each converter cell 7 further transmits the value of voltage of power storage element 24 (also referred to as capacitor voltage Vc) measured by voltage detector 25 to control command generation unit 19 through relay device 18 (S202). Relay device 18 calculates the average value <Vc>, maximum value, minimum value, and the like of capacitor voltages Vc of all converter cells 7, based on capacitor voltage Vc received from each converter cell 7 (S101). The calculation of the average value and the like of capacitor voltages Vc may be performed in CPU 34 of control command generation unit 19.

The average value <Vc> of capacitor voltages is used as an evaluation value for determining whether the voltage of power storage element 24 of each converter cell 7 that constitutes power converter 2 rises as a whole. The evaluation value is therefore not limited to the average value <Vc> of all capacitor voltages. Instead of the average value, the median value may be used, or the average value of power storage elements 24 as many as the number that reflects the entire tendency may be used. Alternatively, the number of converter cells 7 with capacitor voltage Vc exceeding a threshold may be used as the evaluation value.

At the time of a fault or a disturbance of the power system, capacitor voltage Vc of the entire power converter usually rises or lowers. Then, higher-level control device 3 determines whether a fault or a disturbance occurs in the power system by comparing the evaluation value, that is, the average value <Vc> of capacitor voltages with a threshold (S102, S104). As will be described later, when any converter cell 7 is failed singly, there is little change in the average value <Vc> of capacitor voltages. In such a failure of a single converter cell 7, individual control unit 27 of the single converter cell 7 turns on bypass switch BPS.

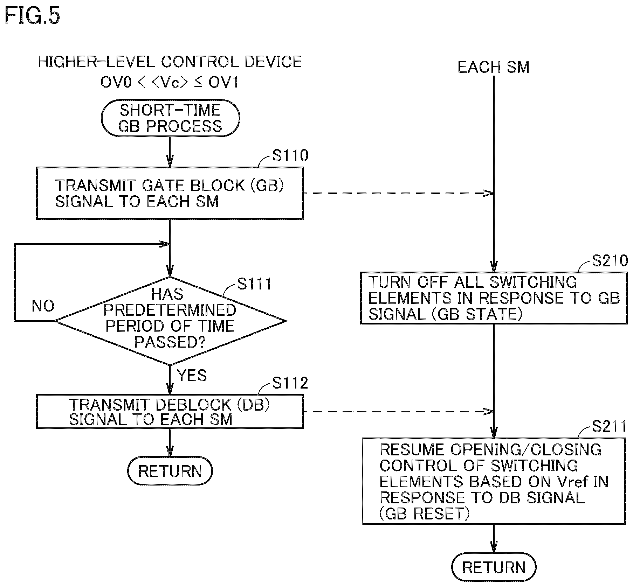

The threshold to be compared with the average value <Vc> of capacitor voltages for overvoltage determination is set in two stages: OV0 and OV1 larger than OV0. If the average value <Vc> of capacitor voltages is higher than the threshold OV0 of the first stage and is not higher than the threshold OV1 of the second stage (YES at S102), higher-level control device 3 executes a relatively short-time gate blocking (GB) process (S103). Here, the gate blocking process is to bring all the switching elements 22 of each converter cell 7 that constitutes power converter 2 into the off state. A detailed procedure of the short-time gate blocking process is shown in Fig. 5.

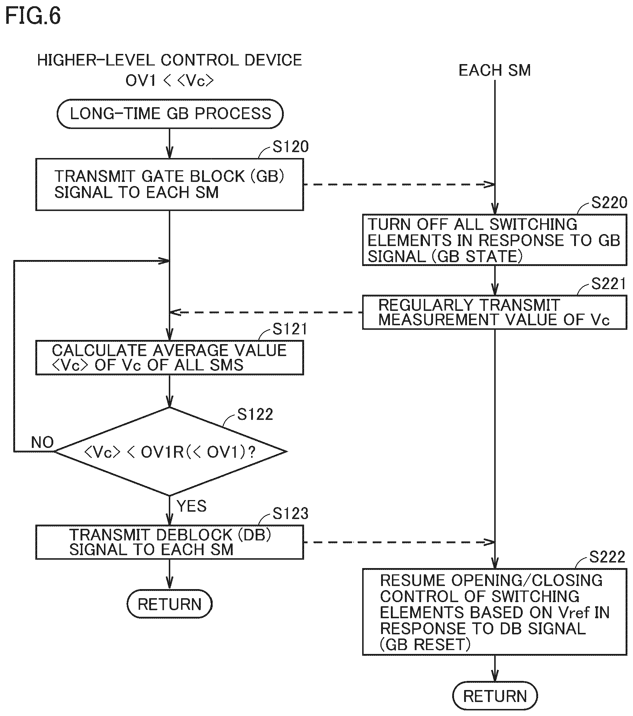

On the other hand, if the average value <Vc> of capacitor voltages is higher than the threshold OV1 (YES at S104), higher-level control device 3 executes a relatively long-time gate blocking process (S105). A detailed procedure of the long-time gate blocking process is shown in Fig. 6.

Fig. 5 is a flowchart showing a detailed procedure of the short-time gate blocking process in Fig. 4. The short-time gate blocking process is executed if the average value <Vc> of capacitor voltages is higher than the threshold OV0 of the first stage and is not higher than the threshold OV1 of the second stage (YES at S102 in Fig. 4).

As shown in Fig. 5, higher-level control device 3 first transmits a gate block (GB) signal to each converter cell 7 (S110). Individual control unit 27 of each converter cell 7 brings all switching elements 22 into the off state in response to the gate block signal received from higher-level control device 3 (S210). As used herein the off state of all switching elements 22 is referred to as gate block state.

If a predetermined period of time has passed since the gate block signal is transmitted to each converter cell 7 (YES at S111), higher-level control device 3 transmits a deblock (DB) signal to each converter cell 7 (S112). Individual control unit 27 of each converter cell 7 resumes the opening/closing control of the switching elements based on voltage command value Vref, in response to the deblock signal received from higher-level control device 3. In other words, the gate block state is reset (S211). The predetermined period of time at step S111 is set, for example, between half a cycle and one cycle of the AC power system.

As described above, the execution of gate blocking only for a certain period of time and subsequent deblocking can alleviate overvoltage attributable to a transient phenomenon at the time of occurrence of a fault of the power system and enables operation continuation of power converter 2.

Fig. 6 is a flowchart showing a detailed procedure of the long-time gate blocking process in Fig. 4. The long-time gate blocking process is executed if the average value <Vc> of capacitor voltages is higher than the threshold OV1 of the second stage (YES at S104 in Fig. 4).

As shown in Fig. 6, higher-level control device 3 first transmits a gate block signal to each converter cell 7 (S120). Individual control unit 27 of each converter cell 7 brings all switching elements 22 into the off state (that is, gate block state), in response to the gate block signal received from higher-level control device 3 (S220).

Further, individual control unit 27 of each converter cell 7 transmits the value of capacitor voltage Vc measured by voltage detector 25 to higher-level control device 3 (S221). Higher-level control device 3 calculates the average value <Vc> of capacitor voltages Vc of all converter cells 7, based on capacitor voltage Vc received from each converter cell 7 (S121). The above steps S221 and S121 are repeatedly performed regularly.

The average value <Vc> of all capacitor voltages Vc is used as an evaluation value for determining whether the voltage of power storage element 24 of each converter cell 7 rises as a whole. The evaluation value is therefore not limited to the average value <Vc> of all capacitor voltages Vc. For example, the number of converter cells 7 with capacitor voltage Vc exceeding a threshold may be used as the evaluation value.

Higher-level control device 3 maintains the gate block state until the calculated average value <Vc> of capacitor voltages (that is, evaluation value) becomes lower than a reset threshold OV1R that is a value lower than the threshold OV1 (NO at S122). Power storage element 24 of each converter cell 7 is provided with a discharge resistor with a large resistance in order to ensure the safety for workers during maintenance. Therefore, in the gate block state, capacitor voltage Vc of each converter cell 7 becomes lower gradually.

If the average value <Vc> of capacitor voltages (that is, evaluation value) becomes lower than the reset threshold OV1R (YES at S122), higher-level control device 3 transmits a deblock (DB) signal to each converter cell 7 (S123). Individual control unit 27 of each converter cell 7 resumes the opening/closing control of the switching elements based on voltage command value Vref, in response to the deblock signal received from higher-level control device 3. In other words, the gate block state is reset (S222). In this way, if the average value <Vc> of capacitor voltages (that is, evaluation value) becomes higher than the threshold OV1 of the second stage, power converter 2 stops for a long time to some extent.

Returning to Fig. 4, at the next step S106, higher-level control device 3 determines whether a serious failure is occurring inside power conversion device 1 or in AC circuit 12 and DC circuit 14 connected to power converter 2. As used herein a serious failure typically refers to a case where operation continuation of power converter 2 is impossible even by turning on bypass switch BPS of converter cell 7, and a case where turning-on of bypass switches BPS in a chain reaction manner is predicted due to a failure inside power conversion device 1 or in AC circuit 12 and DC circuit 14 connected to power converter 2. A description will be given below with more specific examples.

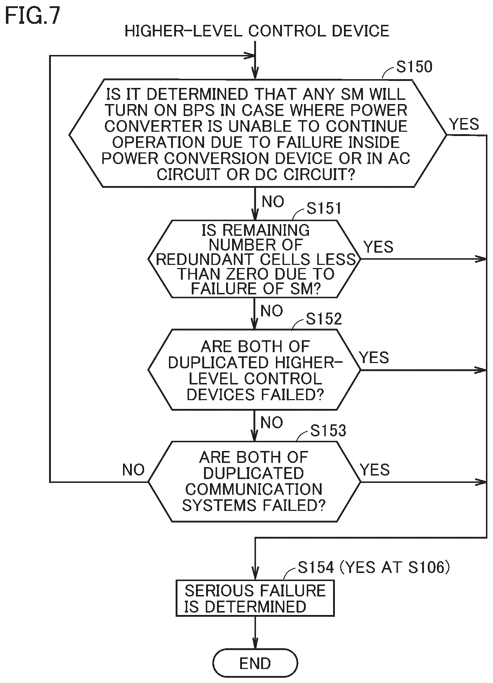

Fig. 7 is a flowchart for explaining a specific example of a criterion for determining a serious failure. Referring to Fig. 7, higher-level control device 3 determines that a serious failure has occurred (S154) if it is determined that any converter cell 7 will turn on bypass switch BPS in a case where power conversion device 1 is unable to continue operation due to a failure inside power conversion device 1 or in AC circuit 12 or DC circuit 14 (YES at S150). For example, higher-level control device 3 determines whether any converter cell 7 will turn on bypass switch BPS, based on a fault point and the kind of failure estimated from fault current and fault voltage in a failure of any of power converter 2, AC circuit 12, and DC circuit 14.

Further, higher-level control device 3 determines that a serious failure has occurred (S154) if the remaining number of redundant cells included in arm circuits 5 and 6 becomes less than zero as a result of turning-on of bypass switch BPS due to a failure of converter cell 7 (YES at S151).

Further, it is determined that a serious failure has occurred (S154) if both higher-level control devices 3 are failed in a case of duplicated higher-level control device 3 (YES at S152) and if both communication systems are failed in a case of a duplicated communication system between higher-level control device 3 and individual control unit 27 of each converter cell 7 (YES at S153). The duplication of higher-level control device 3 will be briefly described below.

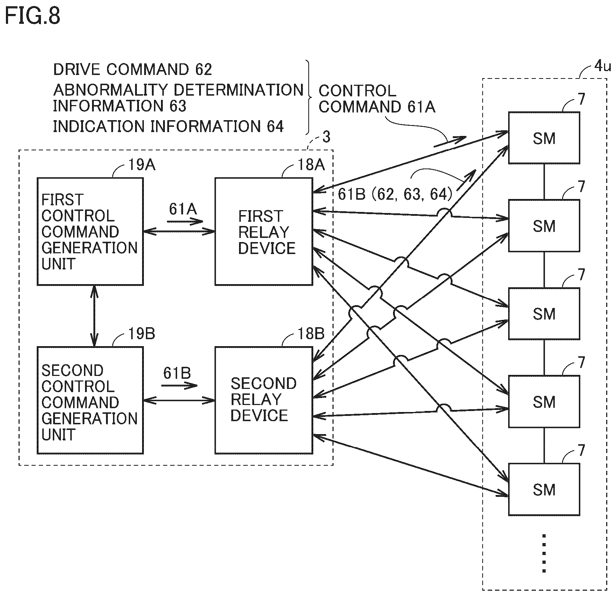

Fig. 8 is a diagram for explaining the configuration and operation of a duplicated control device. Referring to Fig. 8, higher-level control device 3 includes a first control command generation unit 19A, a second control command generation unit 19B, a first relay device 18A, and a second relay device 18B in order to control converter cells 7 provided in each leg circuit 4.

First control command generation unit 19A generates a first control command 61A, and second control command generation unit 19B generates a second control command 61B. First relay device 18A transmits first control command 61A to each converter cell 7, and second relay device 18B transmits second control command 61B to each converter cell 7. Each of first control command 61A and second control command 61B includes a drive command 62, abnormality determination information 63, and indication information 64. Abnormality determination information 63 indicates whether each system is abnormal. Indication information 64 indicates a system that controls the operation of each converter cell 7.

Each of first control command generation unit 19A and second control command generation unit 19B notifies each converter cell 7 of an abnormality determination result using abnormality determination information 63, if its own abnormality is determined, and also notifies the counterpart control command generation unit 19 of the abnormality determination result. Even when the indication information indicates a first system, if abnormality occurrence in first control command generation unit 19A is detected, each converter cell 7 selects a second system as a system that controls the operation of each converter cell 7, and performs PWM control of switching element 22 in accordance with the drive command included in the second control command for the second system. If both of the duplicated control command generation units 19A and 19B are abnormal, both abnormality determination information 63 included in first control command 61A and abnormality determination information 63 included in control command 61B indicate an abnormality determination result.

Referring to Fig. 4 again, if it is determined that a serious failure has occurred (YES at S 106), higher-level control device 3 transmits a turn-on wait signal for bypass switch BPS to each converter cell 7 (S107). Further, higher-level control device 3 opens an AC circuit breaker and stops power converter 2 (S108). If a serious failure has occurred, power conversion device 1 is unable to continue operation. On the other hand, if it is determined that no serious failure is occurring, higher-level control device 3 returns to step S100.

An individual protection operation of each converter cell 7 will now be described. The protection operation of each converter cell 7 differs depending on whether a turn-on wait signal for bypass switch BPS (hereinafter referred to as "BPS turn-on wait signal") has been received from higher-level control device 3 (S200).

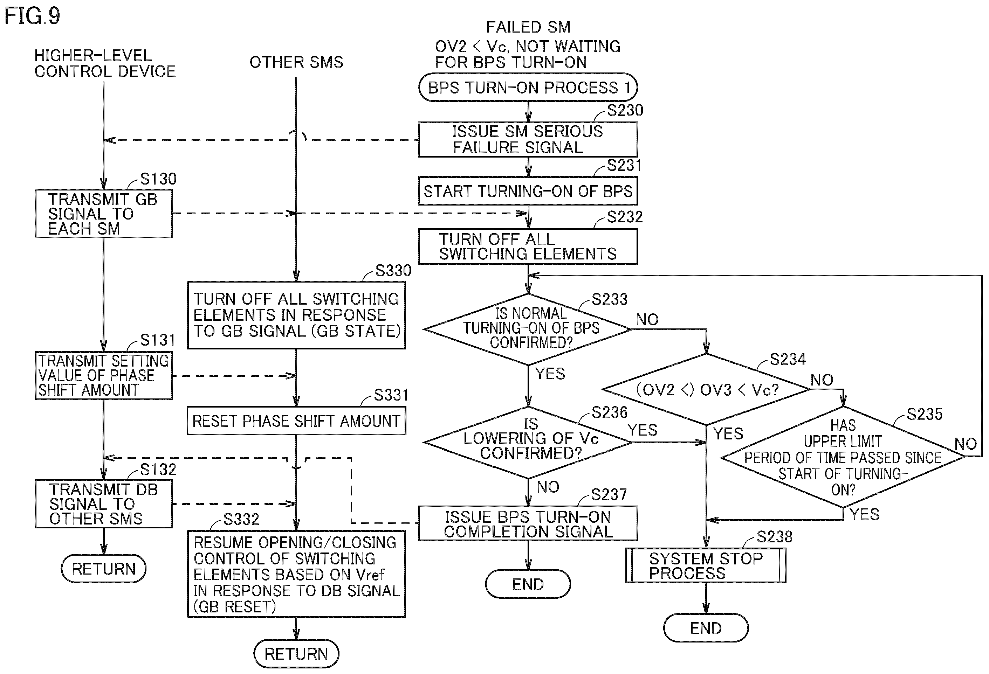

First, a normal state in a case where a BPS turn-on wait signal is not received from higher-level control device 3 (NO at S200) will be described. In this case, individual control unit 27 of each converter cell 7 determines that its own converter cell 7 is failed if capacitor voltage $V_c$ measured by voltage detector 25 is higher than the threshold OV2 (YES at S203). As will be described later with reference to Fig. 9, converter cell 7 determined to be failed (hereinafter referred to as failed SM) turns on bypass switch BPS (S204) to continue the operation of power conversion device 1 with the other converter cells 7 excluding the failed SM. Hereinafter the processing in this case is referred to as bypass switch turn-on process 1 (S204). The detail of bypass switch turn-on process 1 (S204) will be described later with reference to Fig. 9.

Individual control unit 27 may turn on bypass switch BPS if a state in which capacitor voltage $V_c$ is higher than the threshold OV2 continues for a predetermined period of time. Alternatively, two thresholds OV2a and OV2b (>OV2a) may be provided, and if a state in which capacitor voltage $V_c$ is higher than the threshold OV2a continues for a period T1, or if a state in which capacitor voltage $V_c$ is higher than the threshold OV2b for a period T2 (<T1), bypass switch BPS may be turned on. More thresholds and determination periods of time may be set.

On the other hand, if a BPS turn-on wait signal is received from higher-level control device 3 (YES at S200), individual control unit 27 of each converter cell 7 starts recording change in voltage of power storage element 24 in a nonvolatile memory to be referred to at the time of recovery (S205). Further, individual control unit 27 of each converter cell 7 executes gate blocking (GB) to bring all the switching elements into the off state and prohibits unnecessary turning-on of bypass switch BPS (S206). Here, unnecessary turning-on of bypass switch BPS refers to turning-on of bypass switch BPS for a reason other than that capacitor voltage $V_c$ is overvoltage to such a degree that exceeds the threshold OV2H (YES at S207). The recording of change in voltage of power storage element 24 of each converter cell 7 may be performed by relay device 18.

The important point here is that individual control unit 27 of each converter cell 7 does not determine that its own converter cell 7 is failed even if capacitor voltage $V_c$ exceeds the threshold OV2. The reason for this is that even when converter cell 7 is failed, rise of

capacitor voltage $V_c$ of the failed converter cell 7 is suppressed, because gate blocking is executed (S206) if a BPS turn-on wait signal is received (YES at S200). Further, when the bypass switch is turned on, it is necessary to check the health of the contact after manual opening. In a system that turns on the contact by ignition of explosive, the bypass switch needs to be replaced and recovery takes time. Therefore, if turning on the bypass switch does not result in operation continuation of the system, the bypass switch basically should not be turned on.

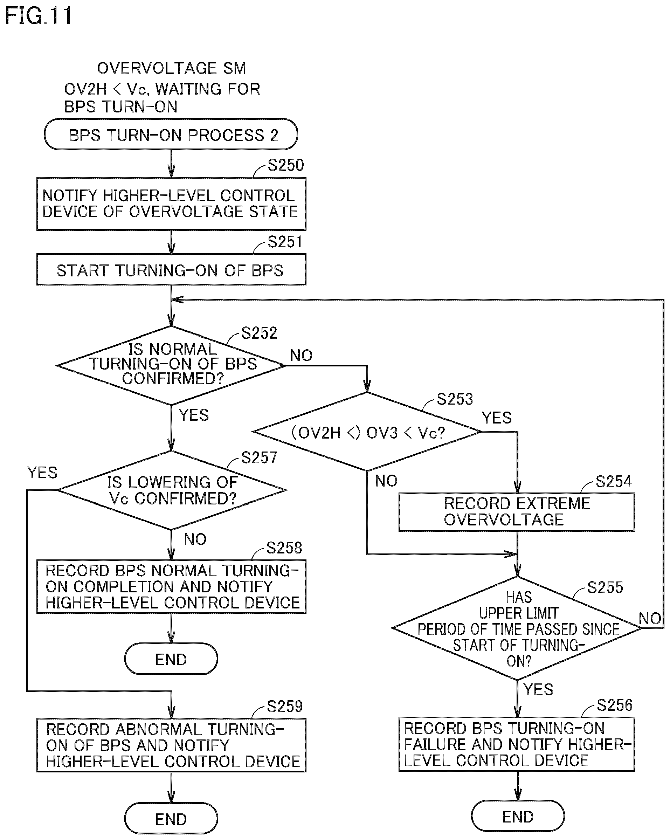

However, even in the gate block state (S206) as a result of receiving a BPS turn-on wait command (YES at S200), capacitor voltage $V_c$ of each converter cell 7 further rises in a case of a severe fault of the power system. Then, in order to prevent breakage of power storage element 24 due to dielectric breakdown, individual control unit 27 of each converter cell 7 executes bypass switch turn-on process 2 to turn on bypass switch BPS (S209) if capacitor voltage $V_c$ exceeds OV2H higher than the threshold OV2 (YES at S207). The detail of bypass switch turn-on process 2 will be described later with reference to Fig. 11.

Individual control unit 27 may execute bypass switch turn-on process 2 to turn on bypass switch BPS if the time during which capacitor voltage $V_c$ exceeds the threshold OV2H continues for a predetermined period of time. Alternatively, two thresholds OV2Ha and OV2Hb (>OV2Ha) may be provided, and if a state in which capacitor voltage $V_c$ is higher than the threshold OV2Ha continues for a period T3, or if a state in which capacitor voltage $V_c$ is higher than the threshold OV2Hb for a period T4 (<T3), bypass switch turn-on process 2 to turn on bypass switch BPS may be executed. More thresholds and determination periods of time may be set.

If a serious failure has occurred (YES at S106), higher-level control device 3 performs a stop process for power conversion device 1 (S108). As a result, the voltage of power storage element 24 is gradually discharged, the main circuit power supply of converter cell 7 eventually stops (YES at S208), and the process ends.

In the flowchart in Fig. 4, if a BPS turn-on wait signal is transmitted from higher-level control device 3 due to a failure of both system of the duplicated communication system, converter cell 7 having the communication failure is unable to receive a BPS turn-on wait signal. In this case, step S205 and subsequent steps are executed based on that it is confirmed that both systems in the duplicated communication system are failed, instead of reception of a BPS turn-on wait signal (YES at S200).

Fig. 9 is a flowchart showing a detailed procedure of bypass switch turn-on process 1 (S204) in Fig. 4. Bypass switch turn-on process 1 (S204) is executed in a normal state in which a BPS turn-on wait signal is not received from higher-level control device 3 (NO at S200 in Fig. 4) and if capacitor voltage $V_c$ of a certain converter cell 7 is higher than the threshold OV2 (YES at S203 in Fig. 4).

As shown in Fig. 9, individual control unit 27 of converter cell 7 failed singly (hereinafter referred to as failed SM) issues a signal to higher-level control device 3 to indicate that converter cell 7 it belongs to has a serious failure (S230). Further, individual control unit 27 of the failed SM starts turning on bypass switch BPS (S231).

Upon receiving a serious failure signal from individual control unit 27 of the failed SM, higher-level control device 3 transmits a gate block signal to all converter cells 7 in order to alleviate the rising rate of capacitor voltage Vc of the failed SM (S130). In response to the gate block signal, each converter cell 7 including the failed SM brings all switching elements 22 into the off state (that is, gate block state) (S330, S232). In converter cell 7 in a failed state, in actuality, not all of the switching elements 22 are controlled to the off state.

Further, higher-level control device 3 calculates a phase shift amount in PWM control excluding the failed SM in the arm circuit including the failed SM, and transmits a setting value of the calculated phase shift amount to each converter cell 7 except the failed SM (S131). In the arm circuit including the failed SM, individual control unit 27 of each converter cell 7 except the failed SM resets the phase shift amount to the received setting value (S331).

If normal turning-on of bypass switch BPS is confirmed (YES at S233) and if it is confirmed that capacitor voltage Vc does not become lower after completion of turning-on of bypass switch BPS (NO at S236), the failed SM issues a signal to notify higher-level control device 3 of completion of turning-on of bypass switch BPS (S236).

In response to the signal of completion of turning-on of bypass switch BPS, higher-level control device 3 transmits a deblock (DB) signal to each converter cell 7 excluding the failed SM (S132). Individual control unit 27 of each converter cell 7 resumes the opening/closing control of the switching elements based on voltage command value Vref, in response to the deblock signal received from higher-level control device 3. In other words, the gate block state is reset (S332).

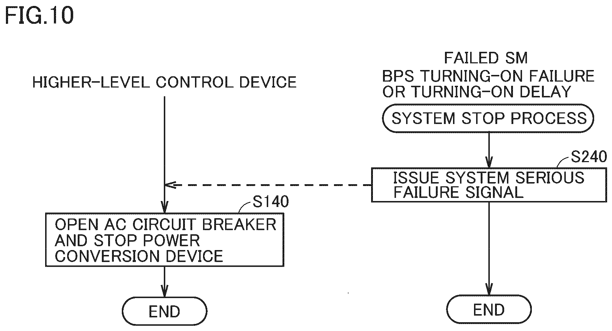

In the above, if normal turning-on of bypass switch BPS is unable to be confirmed (NO at S233), and if capacitor voltage Vc becomes higher than a threshold OV3 (>OV2) which is a limit at which it reaches dielectric breakdown (YES at S234), or if a predetermined upper limit period of time has passed since the start of turning-on without confirming normal turning-on of bypass switch BPS (YES at S235), individual control unit 27 of the failed SM determines that turning-on of bypass switch BPS is failed. In this case, a system stop process for stopping power conversion device 1 is executed in order to prevent scattering of the failed SM due to dielectric breakdown and thus fault propagation to peripheral devices and other converter cells 7 (S238). The detail of the system stop process will be described later with reference to Fig. 10.

The system stop process is also executed (S238) if normal turning-on of bypass switch BPS is confirmed (YES at S233) and if lowering of capacitor voltage Vc is detected (YES at S236). For example, in a case where switching element 22A has a short circuit failure in the half bridge-type converter cell 7 shown in Fig. 2, power storage element 24 is short-circuited and discharged by turning-on of bypass switch BPS. In this case, current that exceeds a permissible value of turning-on of bypass switch BPS flows and the subsequent current carrying performance of bypass switch BPS is unable to be ensured. Thus, power conversion device 1 needs to be temporarily stopped.

Fig. 10 is a flowchart showing a procedure of the system stop process in Fig. 9. The system stop process is typically executed in a case where turning-on and subsequent current carrying performance of bypass switch BPS is unable to be confirmed or ensured, such as a case where turning-on of bypass switch BPS is failed, a case where the turning-on completion signal is unable to be confirmed, a case where the turning-on of bypass switch BPS is delayed because of a rapid rise of capacitor voltage Vc, or a case where bypass switch BPS is short-circuited and turned on.

As shown in Fig. 10, in the above cases, individual control unit 27 of the failed SM issues a signal to higher-level control device 3 to indicate that the entire system of power conversion device 1 has a serious failure (S240).

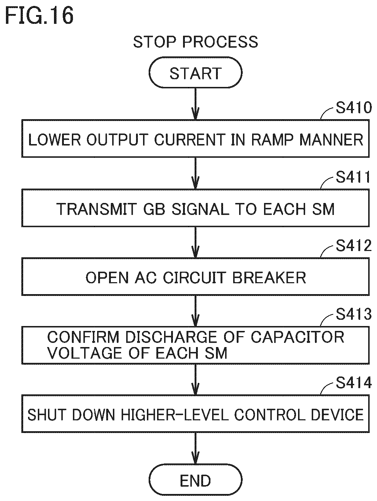

Upon receiving a system serious failure signal from individual control unit 27 of the failed SM, higher-level control device 3 opens the AC circuit breaker between power converter 2 and the AC system and simultaneously executes the stop process for power conversion device 1 (S140). An example of the stop process for power conversion device 1 will be described later with reference to Fig. 16.

Fig. 11 is a flowchart showing a detailed procedure of bypass switch turn-on process 2 (S209) in Fig. 4. Bypass switch turn-on process 2 (S209) is executed if a BPS turn-on wait signal is received from higher-level control device 3 (YES at S202 in Fig. 4) and if capacitor voltage Vc of a certain converter cell 7 is higher than the threshold OV2H (>OV2) (YES at S207 in Fig. 4). Hereinafter the certain converter cell 7 is referred to as overvoltage SM.

As shown in Fig. 11, individual control unit 27 of overvoltage SM notifies higher-level control device 3 that capacitor voltage Vc of converter cell 7 it belongs to is in an overvoltage state to the extent that exceeds the threshold OV2H (S250). Further, individual control unit 27 of the overvoltage SM starts turning on bypass switch BPS (S251).

If normal turning-on of bypass switch BPS is confirmed (YES at S252) and if it is confirmed that capacitor voltage Vc does not become lower after completion of turning-on of bypass switch BPS (NO at S257), individual control unit 27 of the overvoltage SM records completion of normal turning-on of bypass switch BPS in a memory and notifies higher-level control device 3 of completion of normal turning-on (S258). Information as to whether bypass switch BPS can normally turn on is important information at the time of recovery of power converter 2.

In the above, if lowering of capacitor voltage Vc is confirmed after completion of turning-on of bypass switch BPS (YES at S257), individual control unit 27 of the overvoltage SM records abnormal turning-on of bypass switch BPS in a memory and notifies higher-level control device 3 of the abnormal turning-on, and terminates the process. As described in conjunction with step S236 in Fig. 9, in this case, current equal to or larger than permissible current may flow through bypass switch BPS because power storage element 24 is short-circuited and discharged.

On the other hand, in the above, if normal turning-on of bypass switch BPS is unable to be confirmed (NO at S252), and if capacitor voltage Vc becomes higher than the threshold OV3 (>OV2) which is a limit at which it reaches dielectric breakdown (YES at S253), individual control unit 27 of the overvoltage SM records that capacitor voltage Vc is in an extreme overvoltage state in a memory (S254). Further, if a predetermined upper limit period of time has passed since the start of turning-on without confirming normal turning-on of bypass switch BPS (YES at S255), individual control unit 27 of the overvoltage SM records the failure of turning-on of bypass switch BPS and notifies higher-level control device 3 of the failure of turning-on, and terminates the process (S256).

[Threshold Voltage Overview]

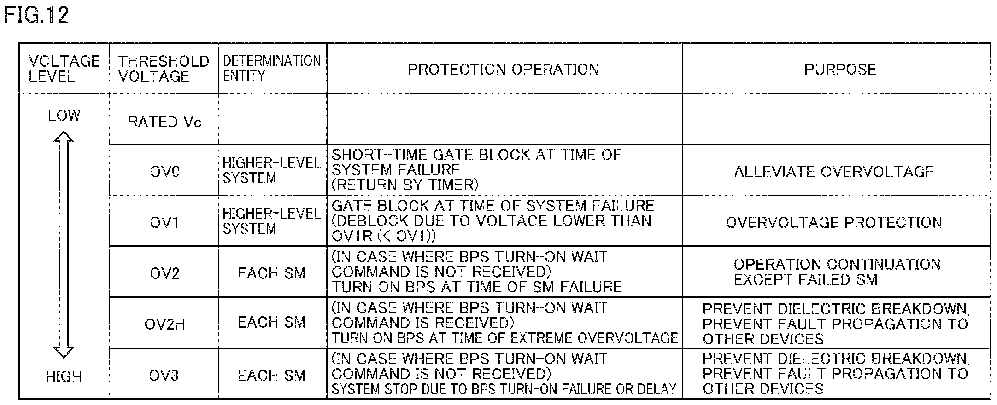

Fig. 12 is a table showing levels of threshold voltages for determining overvoltage described with reference to Fig. 4 to Fig. 11, protection operations associated with the threshold voltages, and their purposes.

Threshold voltages increase in order of OV0, OV1, OV2, OV2H, OV3. In the present disclosure, the threshold OV2 may be referred to as first overvoltage threshold, the threshold OV2H as second overvoltage threshold, the threshold OV0 as third overvoltage threshold, the threshold OV1 as fourth overvoltage threshold, and the threshold OV3 as upper limit. OV2H may be equal to OV3.

Referring to Fig. 12, if the average value <Vc> of capacitor voltages is higher than the threshold OV0, higher-level control device 3 determines that the power system is failed. In this case, higher-level control device 3 executes short-time gate blocking in order to alleviate overvoltage. The short-time gate blocking is returned (that is, deblocked) to the normal state by a timer.

If the average value <Vc> of capacitor voltages is higher than the threshold OV1, higher-level control device 3 determines that the power system is failed. In this case, higher-level control device 3 executes long-time gate blocking for overvoltage protection. The long-time gate blocking is reset (that is, deblocked) when the average value <Vc> of capacitor voltages becomes lower than the threshold OV1R (<OV1).

In a case where a BPS turn-on wait command is not received from higher-level control device 3, if the capacitor voltage Vc of a certain converter cell 7 is higher than the threshold OV2, individual control unit 27 of the certain converter cell 7 determines that the converter cell 7 it belongs to is failed. Individual control unit 27 of the failed converter cell 7 (failed SM) turns on bypass switch BPS in order to continue the operation in SMs except the failed SM.

In a case where a BPS turn-on wait command is received from higher-level control device 3 (that is, during execution of the stop process for power converter 2), if the capacitor voltage Vc of a certain converter cell 7 becomes higher than the threshold OV2H, individual control unit 27 of the certain converter cell 7 determines that the power system has a severe failure. The converter cell 7 with extreme overvoltage due to a severe failure (extreme overvoltage SM) turns on bypass switch BPS in order to prevent dielectric breakdown and to prevent fault propagation to the other devices.

In a case where a BPS turn-on wait command is not received from higher-level control device 3, if capacitor voltage Vc of a certain converter cell 7 becomes higher than the threshold OV3 during turning-on of bypass switch BPS of the certain converter cell 7, individual control unit 27 of the converter cell 7 stops the system by notifying higher-level control device 3 in order to prevent dielectric breakdown and to prevent fault propagation to the other devices.

[Procedure of Generating Voltage Command Value]

A method of generating voltage command value Vref described with reference to Fig. 4 will be briefly described below.

Fig. 13 is a block diagram for explaining a method of generating a voltage command value for each arm circuit. Fig. 13 shows a representative configuration example of a U-phase voltage command generation unit 40U that generates a voltage command value Vprefu output to each converter cell 7 of U-phase upper arm circuit 5 and a voltage command value Vnrefu output to each converter cell 7 of U-phase lower arm circuit 6. U-phase voltage command generation unit 40U corresponds to control command generation unit 19 in Fig. 3 and Fig. 8. Not-shown V-phase voltage command generation unit and W-phase voltage command generation unit have a similar configuration.

Referring to Fig. 13, U-phase voltage command generation unit 40U calculates arm voltage command value Vprefu of the U-phase upper arm circuit and arm voltage command value Vnrefu of the U-phase lower arm circuit. In the present disclosure, the voltage command values of the upper arm circuit and the lower arm circuit of each phase will be collectively denoted as Vref.

U-phase voltage command generation unit 40U includes an AC current control unit 41, a circulating current calculation unit 42, a circulating current control unit 43, a command distribution unit 45, and a voltage balance control unit 44.

AC current control unit 41 calculates a U-phase AC control command value Vcu so that a deviation between a detected U-phase AC current Iacu and a set AC current command value Iacref becomes zero.

Circulating current calculation unit 42 calculates circulating current Izu flowing through U-phase leg circuit 4u, based on arm current Ipu of the U-phase upper arm circuit and arm current Inu of the U-phase lower arm circuit. The circulating current is current circulating between a plurality of leg circuits 4. For example, circulating current Izu flowing through U-phase leg circuit 4u can be calculated using DC current Idc flowing between DC circuit 14 and power converter 2 according to

$$Izu=(Ipu+Ipn)/2-Idc/3 \qquad (1).$$

Voltage balance control unit 44 generates a U-phase circulating current command value Izrefu so that excess and deficiency of stored energy in all converter cells 7 of power converter 2 and imbalance of stored energy between groups (between each phase leg circuit or between U-phase arm circuits) are compensated, based on capacitor voltages Vc of all converter cells 7.

Circulating current control unit 43 calculates a U-phase circulation control command value Vzu for controlling U-phase circulating current Izu set by circulating current calculation unit 42 to follow U-phase circulating current command value Izrefu set by voltage balance control unit 44. Circulating current control unit 43 can be configured with a controller that executes PI control, PID control, or the like on a deviation of U-phase circulating current Izu from U-phase circulating current command value Izrefu. In other words, voltage balance control unit 44 configures a minor loop that controls circulating current to suppress excess and deficiency of stored energy in all converter cells 7 or a plurality of converter cells 7 for each group.

Command distribution unit 45 receives U-phase AC control command value Vcu, DC voltage command value Vdcref, neutral point voltage Vsn, U-phase AC voltage Vacu, and U-phase circulation control command value Vzu. Command distribution unit 45 calculates respective voltages shared and output by the U-phase upper arm circuit and the U-phase lower arm circuit, based on these inputs. Command distribution unit 45 determines arm voltage command value Vprefu of the U-phase upper arm circuit and arm voltage command value Vnrefu of the U-phase lower arm circuit by subtracting a voltage drop caused by an inductance component in the U-phase upper arm circuit or the U-phase lower arm circuit from each of the calculated voltages.

[Start Process Procedure and Stop Process Procedure for Power Conversion Device]

The start procedure and the stop procedure for power conversion device 1 will be described below taking a high voltage direct current transmission (HVDC) system as an example.

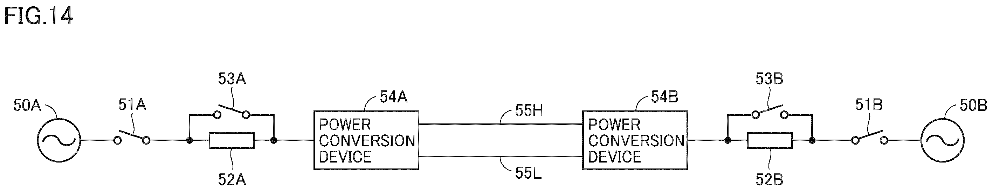

Fig. 14 is a diagram showing a high voltage direct current transmission system. Referring to Fig. 14, a high voltage direct current transmission system includes AC circuit breakers 51A and 51B, initial charge resistors 52A and 52B, bypass switches 53A and 53B, power conversion devices 54A and 54B, a high potential-side DC transmission line 55H, and a low potential-side DC transmission line 55L.

Each of power conversion devices 54A and 54B corresponds to power conversion device 1 in Fig. 1. A high potential-side DC terminal Np of power conversion device 54A and a high potential-side DC terminal Np of power conversion device 54B are connected through DC transmission line 55H. A low potential-side DC terminal Nn of power conversion device 54A and a low potential-side DC terminal Nn of power conversion device 54B are connected through DC transmission line 55L.

Each of AC terminals Nu, Nv, and Nw of power conversion device 54A is connected to an AC power system 50A through initial charge resistor 52A and AC circuit breaker 51A. Bypass switch 53A is connected in parallel with initial charge resistor 52A. Similarly, each of AC terminals Nu, Nv, and Nw of power conversion device 54B is connected to an AC power system 50B through initial charge resistor 52B and AC circuit breaker 51B. Bypass switch 53B is connected in parallel with initial charge resistor 52B.

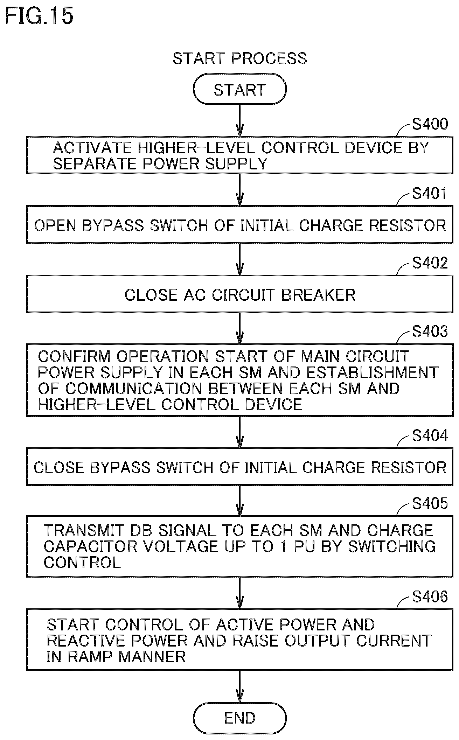

Fig. 15 is a flowchart showing an example of the start process procedure for the power conversion device in Fig. 14. Referring to Fig. 14 and Fig. 15, first, higher-level control device 3 of power conversion devices 54A and 54B is activated by a separate power supply (S400).

Next, higher-level control device 3 of power conversion devices 54A and 54B opens the respective bypass switches 53A and 53B (S401).

Subsequently, higher-level control device 3 of power conversion devices 54A and 54B closes the respective AC circuit breakers 51A and 51B (S402). As a result, power storage element 24 of each converter cell 7 in power conversion devices 54A and 54B is charged to about 0.6 to 0.7 pu while suppressing inrush current via bypass switches 53A and 53B.

Higher-level control device 3 of power conversion devices 54A and 54B confirms the operation start of the main circuit power supply of each converter cell 7 and the establishment of communication between each converter cell 7 and higher-level control device 3 (S403), and closes the respective bypass switches 53A and 53B of initial charge resistors 52A and 52B (S404). Further, higher-level control device 3 of power conversion devices 54A and 54B transmits a deblock (DB) signal to each converter cell 7 and allows charging of capacitor voltage Vc up to 1 pu by switching control of switching element 22 (S405).

Subsequently, higher-level control device 3 of power conversion devices 54A and 54B starts control of active power and reactive power and raises output current in a ramp manner (S406).

Fig. 16 is a flowchart showing an example of the stop process procedure for the power conversion device in Fig. 14. Referring to Fig. 14 and Fig. 16, first, higher-level control device 3 of power conversion devices 54A and 54B lowers output current in a ramp manner (S410).

Next, higher-level control device 3 of power conversion devices 54A and 54B transmits a gate block signal to each converter cell 7 (S411) and opens the respective AC circuit breakers 51A and 51B (S412).

Subsequently, when higher-level control device 3 confirms discharge of capacitor voltage Vc of each converter cell 7 (S413), higher-level control device 3 is shut down (S414).

[Effects of First Embodiment]

As described above, in power conversion device 1 according to the first embodiment, overvoltage of power storage element 24 of each converter cell 7 that constitutes power converter 2 is handled differently depending on the following three cases. Specifically, the three cases include: (1) a case where a fault or a disturbance occurs in the AC system or the DC system; (2) a case where a failure of a single converter cell 7 causes overvoltage of a single power storage element; and (3) a case where a voltage rise occurs in the power storage element of each converter cell even in a gate block state at the time of a severe fault of the power system.

In the present embodiment, the case (1) is handled by higher-level control device 3, and when a system fault is determined, higher-level control device 3 transmits a gate block signal to each converter cell 7. The cases (2) and (3) are handled by the local processing by each converter cell 7, and bypass switch BPS is turned on in converter cell 7 having overvoltage detected.

The important point here is that in the normal state in which a BPS turn-on wait signal is not received from higher-level control device 3, each converter cell 7 compares its capacitor voltage Vc with the threshold OV2, whereas the threshold OV2 is changed to the higher threshold OV2H until system stop is completed after a BPS turn-on wait signal is received from higher-level control device 3. With this configuration, in a case where a BPS turn-on wait command is not received, overvoltage of capacitor voltage Vc caused by a failure of a single converter cell 7 can be determined by comparison with the threshold OV2. On the other hand, in a case where a BPS turn-on wait command is received, extreme overvoltage of capacitor voltage Vc at the time of a severe fault can be determined by comparison with the threshold OV2H.

Further, in a case where a BPS turn-on wait command is received, gate blocking is executed in each converter cell 7, thereby preventing a switching surge voltage by the switching element. As a result, each converter cell 7 can withstand overvoltage higher than during switching. Then, the threshold voltage for bypass switch turning-on is changed to a higher value whereby turning-on of the bypass switch can be delayed to an appropriate timing, that is, immediately before cell dielectric breakdown in a state free from a switching surge.

Accordingly, according to the first embodiment, at the time of occurrence of a system disturbance and a system fault, the occurrence of a system disturbance and a system fault is determined by the higher-level system and gate blocking is executed, whereas in a case where a BPS turn-on wait command is not issued, a cell failure is determined in each converter cell 7 and the bypass switch is turned on. In this way, since the handling at the time of a system disturbance and a system fault and the handling at the time of a cell failure are different, unnecessary turning-on of the bypass switch at the time of a system disturbance and a system fault can be prevented, and turning-on of the bypass switch BPS is enabled immediately before dielectric breakdown which truly requires turning-on.

The above control can alleviate the processing load on higher-level control device 3 and increase the speed of protection processing for overvoltage of power storage element 24 and robustness. If the capacitor capacity of power storage element 24 of each converter cell 7 is reduced for size reduction of power converter 2, the rate of change of capacitor voltage Vc increases and therefore it is more important to increase the protection processing speed.

Second Embodiment

In a second embodiment, a modification of the criterion for determining whether higher-level control device 3 transmits a gate block signal to each converter cell 7 at the time of a system disturbance and at the time of a system fault will be described.

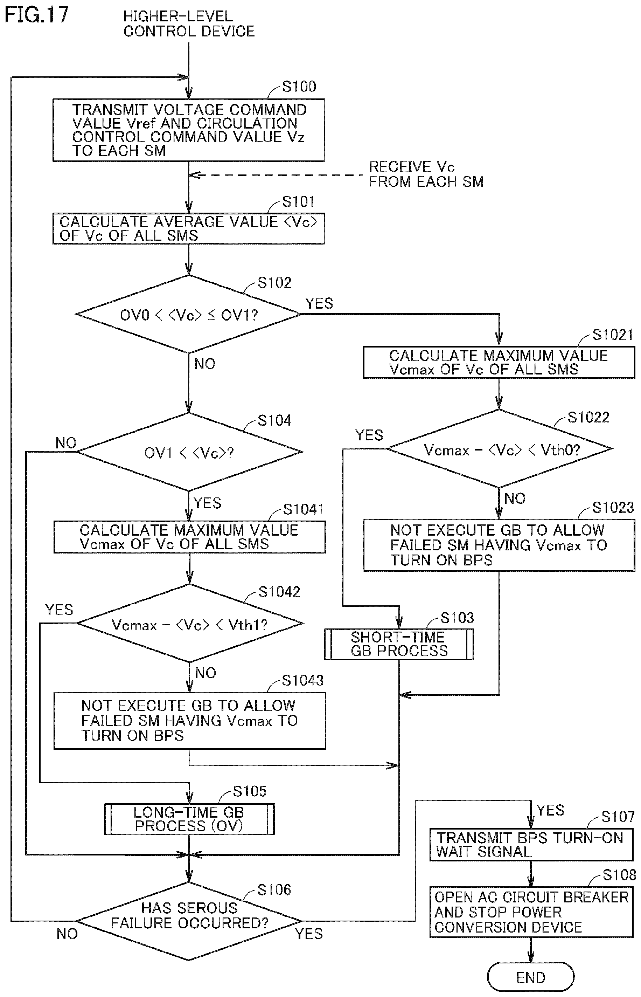

Fig. 17 is a flowchart showing a modification of processing by the higher-level control device in the overvoltage protection process shown in Fig. 4. Specifically, in the flowchart in Fig. 17, steps S1021 to S1023 are added in order to increase the determination accuracy at step S102 in Fig. 4, and steps S1041 to S1043 are added in order to increase the determination accuracy at step S104 in Fig. 4. The other steps in Fig. 17 are similar to those in Fig. 4 and the same or corresponding steps are denoted by the same reference signs and will not be further elaborated.

Referring to Fig. 17, in order to determine whether a fault or a disturbance occurs in the power system, higher-level control device 3 compares the average value <Vc> of capacitor voltages with the thresholds OV1 and OV2 (S103, S104). As a result, if the average value <Vc> of capacitor voltages is higher than the threshold OV0 of the first stage and is not higher than the threshold OV1 of the second stage (YES at S102), higher-level control device 3 proceeds to steps S1021 to S1023.

Specifically, higher-level control device 3 calculates the maximum value Vcmax of capacitor voltages Vc of all converter cells 7 (S1021) and determines whether a difference between the maximum value Vcmax of capacitor voltages and the average value <Vc> is smaller than a threshold Vth0 (also referred to as first differential threshold) (S1022). As a result of the determination, if the difference between the maximum value Vcmax of capacitor voltages and the average value <Vc> is smaller than the threshold Vth0 (YES at S 1022), higher-level control device 3 determines that the capacitor voltages Vc of converter cells 7 are increased as a whole by a fault or disturbance of the power system, and executes the short-time gate blocking process described with reference to Fig. 5 for all converter cells 7 (S103).

On the other hand, if the difference between the maximum value Vcmax of capacitor voltages and the average value <Vc> is not smaller than the threshold Vth0 (NO at S1022), higher-level control device 3 determines that at least converter cell 7 having the maximum value Vcmax of the voltage of power storage element 24 is failed singly, and does not perform the short-time gate blocking process, thereby raising the voltage of power storage element 24 of this converter cell 7 to cause bypass switch BPS to turn on (S1023).

Next, if the average value <Vc> of capacitor voltages is higher than the threshold OV1 of the second stage (YES at S104), higher-level control device 3 proceeds to steps S1041 to S1043.

Specifically, higher-level control device 3 calculates the maximum value Vcmax of capacitor voltages Vc of all converter cells 7 (S1041) and determines whether a difference between the maximum value Vcmax of capacitor voltages and the average value <Vc> is smaller than a threshold Vth1 (also referred to as second differential threshold) (S1042). As a result of the determination, if the difference between the maximum value Vcmax of capacitor voltages and the average value <Vc> is smaller than the threshold Vth1 (YES at S 1042), higher-level control device 3 determines that the capacitor voltages Vc of converter cells 7 are increased as a whole by a fault or disturbance of the power system, and executes the long-time gate blocking process described with reference to Fig. 6 for all converter cells 7 (S106).

On the other hand, if the difference between the maximum value Vcmax of capacitor voltages and the average value <Vc> is not smaller than the threshold Vth1 (NO at S1042), higher-level control device 3 determines that at least converter cell 7 having the maximum value Vcmax of the voltage of power storage element 24 is failed singly, and does not perform the long-time gate blocking process, thereby raising the voltage of power storage element 24 of this converter cell 7 to cause bypass switch BPS to turn on (S1043).

Based on the above, whether to transmit a gate block signal to each converter cell 7 can be determined more accurately.

Embodiments disclosed here should be understood as being illustrative rather than being limitative in all respects. The scope of the subject application is shown not in the foregoing description but in the claims, and it is intended that all modifications that come within the meaning and range of equivalence to the claims are embraced here.

REFERENCE SIGNS LIST

1, 54A, 54B power conversion device, 2 power converter, 3 higher-level control device, 4 leg circuit, 5, 6 arm circuit, 7 converter cell, 8A, 8B reactor, 9A, 9B arm current detector, 10 AC voltage detector, 11A, 11B DC voltage detector, 12 AC circuit, 13 transformer, 14 DC circuit, 16 AC current detector, 17 DC current detector, 20HB conversion circuit (bridge circuit), 22 switching element, 24 power storage element, 25 voltage detector, 26 N, 26P input/output terminal, 27 individual control unit, 30 input converter, 31 sample hold circuit, 32 multiplexer, 33 A/D converter, 34 CPU, 35 RAM, 36 ROM, 37 input/output interface, 38 auxiliary storage device, 39 bus, 40U U-phase voltage command generation unit, 41 AC current control unit, 42 circulating current calculation unit, 43 circulating current control unit, 44 voltage balance control unit, 45 command distribution unit, 50A, 50B AC power system, 51A, 51B AC circuit breaker, 52A, 52B initial charge resistor, 53A, 53B, BPS bypass switch, 55H high potential-side DC transmission line, 55L low potential-side DC transmission line, Nn low potential-side DC terminal, Np high potential-side DC terminal, Nu, Nv, Nw AC terminal, Vc capacitor voltage.

**Claims**

1. A power conversion device comprising:

   a power converter including an arm circuit including a plurality of converter cells connected in cascade; and
   a higher-level control device to control the power converter,
   each of the converter cells including:

      a first input/output terminal and a second input/output terminal;
      a bridge circuit including a plurality of semiconductor switching elements;
      a power storage element connected to the first input/output terminal and the second input/output terminal through the bridge circuit;
      a bypass switch connecting the first input/output terminal and the second input/output terminal to each other; and

an individual control unit connected to the higher-level control device through a signal line, wherein

in a case where a turn-on wait command for the bypass switch is not received from the higher-level control device, the individual control unit turns on the bypass switch when a voltage of the power storage element exceeds a first overvoltage threshold, and

in a case where the turn-on wait command for the bypass switch is received, the individual control unit performs gate blocking to turn off the semiconductor switching elements, turns on the bypass switch when a voltage of the power storage element exceeds a second overvoltage threshold higher than the first overvoltage threshold, instead of the first overvoltage threshold, and does not turn on the bypass switch for a reason other than that a voltage of the power storage element exceeds the second overvoltage threshold.

2. The power conversion device according to claim 1, wherein

the power converter performs power conversion between an AC circuit and a DC circuit, and

in a case where the power converter is unable to continue operation due to a failure inside the power conversion device or in the AC circuit or the DC circuit and it is determined that any converter cell will turn on the bypass switch, the higher-level control device transmits the turn-on wait command for the bypass switch to each of the converter cells and stops the power converter.

3. The power conversion device according to claim 2, wherein the higher-level control device determines whether any converter cell will turn on the bypass switch, based on a fault point and a kind of failure estimated from fault current and fault voltage in a failure of any of the power converter, the AC circuit, and the DC circuit.

4. The power conversion device according to any one of claims 1 to 3, wherein in a case where the bypass switch is turned on due to a failure of the converter cell and consequently a remaining number of redundant cells included in the arm circuit becomes less than zero, the higher-level control device transmits the turn-on wait command for the bypass switch to each of the converter cells and stops the power converter.

5. The power conversion device according to any one of claims 1 to 4, wherein the higher-level control device is duplicated, and in a case where both two systems of the duplicated higher-level control device are failed, the higher-level control device transmits the turn-on wait command for the bypass switch to each of the converter cells and stops the power converter.

6. The power conversion device according to any one of claims 1 to 5, wherein

the higher-level control device and the individual control unit of each of the converter cells are connected via a duplicated communication system, and

in a case where both two systems of the communication system between a first converter cell of the converter cells and the higher-level control device are failed, the higher-level control device transmits the turn-on wait command for the bypass switch to each of the converter cells and stops the power converter, and the first converter cell performs gate blocking to turn off the semiconductor switching elements.

7. The power conversion device according to any one of claims 1 to 6, wherein

in a case where the turn-on wait command for the bypass switch is not received, the individual control unit turns on the bypass switch in a case where a state in which a voltage of the power storage element exceeds the first overvoltage threshold continues for a predetermined period of time, and

in a case where the turn-on wait command for the bypass switch is received, the individual control unit turns on the bypass switch in a case where a state in which a voltage of the power storage element exceeds the second overvoltage threshold continues for a predetermined period of time.

8. The power conversion device according to any one of claims 1 to 7, wherein in a case where the turn-on wait command for the bypass switch is received, the individual control unit records change in voltage of the power storage element in a nonvolatile memory.

9. The power conversion device according to any one of claims 1 to 8, wherein

in a case where the turn-on wait command for the bypass switch is not received, the individual control unit of each converter cell transmits a serious failure signal to the higher-level control device when a voltage of the power storage element exceeds the first overvoltage threshold, and transmits a completion notice when turning-on of the bypass switch is completed, and

the higher-level control device transmits a gate block command to the individual control unit of each converter cell when the serious failure signal is received, and transmits a reset notice for the gate block command to the individual control unit of each converter cell when the completion notice of turning-on of the bypass switch is received.

10. The power conversion device according to any one of claims 1 to 9, wherein

the individual control unit of each converter cell transmits a measurement value of voltage of the power storage element to the higher-level control device,

the higher-level control device calculates an evaluation value representing a degree of magnitude of voltage of the power storage elements in the converter cells that constitute the power converter as a whole, based on the measurement value of voltage of the power storage element received from the individual control unit of each converter cell, and

the higher-level control device transmits a gate block command to the individual control unit of each converter cell when the evaluation value exceeds a third overvoltage threshold, and transmits a reset notice for the gate block command after elapse of a certain period of time since the gate block command is transmitted.

11. The power conversion device according to claim 10, wherein in a case where the higher-level control device transmits the gate block command to the individual control unit of each converter cell when the evaluation value exceeds a fourth overvoltage threshold higher than the third overvoltage threshold, the higher-level control device does not transmit a reset notice for the gate block command until the evaluation value becomes less than a reset threshold lower than the fourth overvoltage threshold.

12. The power conversion device according to claim 11, wherein

the higher-level control device calculates, as the evaluation value, an average value of voltages of the power storage elements included in the power converter and calculates a maximum value of voltages of the power storage elements, in a case where the evaluation value exceeds the third overvoltage threshold and a difference between the maximum value and the average value is equal to or larger than a first differential threshold, the higher-level control device does not transmit the gate block command to the individual control unit of each converter cell, and in a case where the evaluation value exceeds the fourth overvoltage threshold and a difference between the maximum value and the average value is equal to or larger than a second differential threshold, the higher-level control device does not transmit the gate block command to the individual control unit of each converter cell.

13. The power conversion device according to any one of claims 1 to 12, wherein

in a case where the turn-on wait command for the bypass switch is not received and a voltage of the power storage element exceeds an upper limit equal to the second overvoltage threshold or higher than the second overvoltage threshold after start of turning-on and before completion of turning-on of the bypass switch, the individual control unit transmits a system serious failure signal to the higher-level control device, and

the higher-level control device stops the power converter in a case where the system serious failure signal is received.

14. The power conversion device according to claim 13, wherein in a case where lowering of a voltage of the power storage element is detected after completion of turning-on of the bypass switch, the individual control unit transmits the system serious failure signal to the higher-level control device.

FIG.1

FIG.2

FIG.3

**FIG.4**

HIGHER-LEVEL
CONTROL DEVICE

EACH SM

S200 — BPS TURN-ON WAIT? — YES / NO

S100 — TRANSMIT VOLTAGE COMMAND VALUE Vref AND CIRCULATION CONTROL COMMAND VALUE Vz TO EACH SM

S201 — CONTROL OPENING/CLOSING OF SWITCHING ELEMENTS BASED ON Vref AND Vz

S202 — TRANSMIT MEASUREMENT VALUE OF Vc

S101 — CALCULATE AVERAGE VALUE ⟨Vc⟩ OF Vc OF ALL SMS

S203 — OV2 < Vc? — NO / YES

S204 — BPS TURN-ON PROCESS 1

S102 — OV0 < ⟨Vc⟩ ≤ OV1? — YES / NO

S103 — SHORT-TIME GB PROCESS

S205 — START RECORDING VOLTAGE OF POWER STORAGE ELEMENT

S104 — OV1 < ⟨Vc⟩? — YES / NO

S206 — TURN OFF ALL SWITCHING ELEMENTS (GB) PROHIBIT UNNECESSARY BPS TURN-ON

S105 — LONG-TIME GB PROCESS

S207 — (OV2 <) OV2H < Vc? — YES / NO

S106 — HAS SEROUS FAILURE OCCURRED? — NO / YES

S208 — DOES POWER SUPPLY OF SM STOP? — NO / YES

S107 — TRANSMIT BPS TURN-ON WAIT SIGNAL

S209 — BPS TURN-ON PROCESS 2

S108 — OPEN AC CIRCUIT BREAKER AND STOP POWER CONVERTER

END

END

FIG.5

HIGHER-LEVEL CONTROL DEVICE
$OV0 < <Vc> \leq OV1$

EACH SM

( SHORT-TIME
GB PROCESS )

TRANSMIT GATE BLOCK (GB)
SIGNAL TO EACH SM — S110

HAS
PREDETERMINED
PERIOD OF TIME
PASSED? — S111

NO

YES

TRANSMIT DEBLOCK (DB)
SIGNAL TO EACH SM — S112

( RETURN )

TURN OFF ALL SWITCHING
ELEMENTS IN RESPONSE TO GB
SIGNAL (GB STATE) — S210

RESUME OPENING/CLOSING
CONTROL OF SWITCHING
ELEMENTS BASED ON Vref IN
RESPONSE TO DB SIGNAL
(GB RESET) — S211

( RETURN )

# FIG.6

HIGHER-LEVEL CONTROL DEVICE
OV1 < <Vc>

( LONG-TIME GB PROCESS )

S120
TRANSMIT GATE BLOCK (GB)
SIGNAL TO EACH SM

S121
CALCULATE AVERAGE VALUE
<Vc> OF Vc OF ALL SMS

S122
NO <Vc> < OV1R(< OV1)?

YES
S123
TRANSMIT DEBLOCK (DB)
SIGNAL TO EACH SM

( RETURN )

EACH SM

S220
TURN OFF ALL SWITCHING
ELEMENTS IN RESPONSE TO GB
SIGNAL (GB STATE)

S221
REGULARLY TRANSMIT
MEASUREMENT VALUE OF Vc

S222
RESUME OPENING/CLOSING
CONTROL OF SWITCHING
ELEMENTS BASED ON Vref IN
RESPONSE TO DB SIGNAL
(GB RESET)

( RETURN )

FIG.7

HIGHER-LEVEL CONTROL DEVICE

S150

IS IT DETERMINED THAT ANY SM WILL TURN ON BPS IN CASE WHERE POWER CONVERTER IS UNABLE TO CONTINUE OPERATION DUE TO FAILURE INSIDE POWER CONVERSION DEVICE OR IN AC CIRCUIT OR DC CIRCUIT? — YES

NO — S151

IS REMAINING NUMBER OF REDUNDANT CELLS LESS THAN ZERO DUE TO FAILURE OF SM? — YES

NO — S152

ARE BOTH OF DUPLICATED HIGHER-LEVEL CONTROL DEVICES FAILED? — YES

NO — S153

ARE BOTH OF DUPLICATED COMMUNICATION SYSTEMS FAILED? — YES
NO

S154 (YES AT S106)

SERIOUS FAILURE IS DETERMINED

END

FIG.8

DRIVE COMMAND 62
ABNORMALITY DETERMINATION
INFORMATION 63                    CONTROL
INDICATION INFORMATION 64         COMMAND 61A

# FIG.9

HIGHER-LEVEL CONTROL DEVICE

OTHER SMS

FAILED SM
OV2 < Vc, NOT WAITING FOR BPS TURN-ON

( BPS TURN-ON PROCESS 1 )

S230
ISSUE SM SERIOUS FAILURE SIGNAL

S130
TRANSMIT GB SIGNAL TO EACH SM

S231
START TURNING-ON OF BPS

S232
TURN OFF ALL SWITCHING ELEMENTS

S330
TURN OFF ALL SWITCHING ELEMENTS IN RESPONSE TO GB SIGNAL (GB STATE)

S233
IS NORMAL TURNING-ON OF BPS CONFIRMED? — NO

YES

S234
(OV2 <) OV3 < Vc? — NO

YES

S235
HAS UPPER LIMIT PERIOD OF TIME PASSED SINCE START OF TURNING-ON? — NO

YES

S131
TRANSMIT SETTING VALUE OF PHASE SHIFT AMOUNT

S331
RESET PHASE SHIFT AMOUNT

S236
IS LOWERING OF Vc CONFIRMED? — YES

NO

S132
TRANSMIT DB SIGNAL TO OTHER SMS

S237
ISSUE BPS TURN-ON COMPLETION SIGNAL

( END )

S238
SYSTEM STOP PROCESS

( END )

S332
RESUME OPENING/CLOSING CONTROL OF SWITCHING ELEMENTS BASED ON Vref IN RESPONSE TO DB SIGNAL (GB RESET)

( RETURN )

( RETURN )

EP 4 622 086 A1

FIG.10

HIGHER-LEVEL CONTROL DEVICE

FAILED SM
BPS TURNING-ON FAILURE
OR TURNING-ON DELAY

(SYSTEM STOP PROCESS)

S240

ISSUE SYSTEM SERIOUS
FAILURE SIGNAL

S140

OPEN AC CIRCUIT BREAKER
AND STOP POWER
CONVERSION DEVICE

(END)

(END)

28

FIG.11

OVERVOLTAGE SM
OV2H < Vc, WAITING FOR
BPS TURN-ON

BPS TURN-ON PROCESS 2

S250
NOTIFY HIGHER-LEVEL CONTROL
DEVICE OF OVERVOLTAGE STATE

S251
START TURNING-ON OF BPS

S252
IS NORMAL
TURNING-ON OF BPS
CONFIRMED? — NO

YES

S253
(OV2H <) OV3 < Vc? — YES

NO

S254
RECORD EXTREME
OVERVOLTAGE

S257
IS LOWERING OF
Vc CONFIRMED? — YES

NO

S258
RECORD BPS NORMAL TURNING-
ON COMPLETION AND NOTIFY
HIGHER-LEVEL CONTROL DEVICE

END

S255
HAS
UPPER LIMIT
PERIOD OF TIME PASSED SINCE
START OF TURNING-
ON? — NO

YES

S259
RECORD ABNORMAL TURNING-
ON OF BPS AND NOTIFY
HIGHER-LEVEL CONTROL DEVICE

END

S256
RECORD BPS TURNING-ON
FAILURE AND NOTIFY HIGHER-
LEVEL CONTROL DEVICE

END

# FIG.12

| VOLTAGE LEVEL | THRESHOLD VOLTAGE | DETERMINATION ENTITY | PROTECTION OPERATION | PURPOSE |
|---|---|---|---|---|
| LOW ⇑ ⇓ HIGH | RATED Vc | | | |
| | OV0 | HIGHER-LEVEL SYSTEM | SHORT-TIME GATE BLOCK AT TIME OF SYSTEM FAILURE (RETURN BY TIMER) | ALLEVIATE OVERVOLTAGE |
| | OV1 | HIGHER-LEVEL SYSTEM | GATE BLOCK AT TIME OF SYSTEM FAILURE (DEBLOCK DUE TO VOLTAGE LOWER THAN OV1R (< OV1)) | OVERVOLTAGE PROTECTION |
| | OV2 | EACH SM | (IN CASE WHERE BPS TURN-ON WAIT COMMAND IS NOT RECEIVED) TURN ON BPS AT TIME OF SM FAILURE | OPERATION CONTINUATION EXCEPT FAILED SM |
| | OV2H | EACH SM | (IN CASE WHERE BPS TURN-ON WAIT COMMAND IS RECEIVED) TURN ON BPS AT TIME OF EXTREME OVERVOLTAGE | PREVENT DIELECTRIC BREAKDOWN, PREVENT FAULT PROPAGATION TO OTHER DEVICES |
| | OV3 | EACH SM | (IN CASE WHERE BPS TURN-ON WAIT COMMAND IS NOT RECEIVED) SYSTEM STOP DUE TO BPS TURN-ON FAILURE OR DELAY | PREVENT DIELECTRIC BREAKDOWN, PREVENT FAULT PROPAGATION TO OTHER DEVICES |

FIG.13

U-PHASE VOLTAGE COMMAND GENERATION UNIT

3

40U

Vdcref
Vsn
Vacu

Iacu
Iacref

Ipu
Inu

41 — AC CURRENT CONTROL UNIT → Vcu

42 — CIRCULATING CURRENT CALCULATION UNIT → Izu

43 — CIRCULATING CURRENT CONTROL UNIT → Vzu

44 — VOLTAGE BALANCE CONTROL UNIT → Izrefu

45 — COMMAND DISTRIBUTION UNIT → Vprefu / Vnrefu

FOR ALL CELLS
Vc
:
Vc

FIG.14

# FIG.15

START PROCESS

START

S400
ACTIVATE HIGHER-LEVEL CONTROL DEVICE BY SEPARATE POWER SUPPLY

S401
OPEN BYPASS SWITCH OF INITIAL CHARGE RESISTOR

S402
CLOSE AC CIRCUIT BREAKER

S403
CONFIRM OPERATION START OF MAIN CIRCUIT POWER SUPPLY IN EACH SM AND ESTABLISHMENT OF COMMUNICATION BETWEEN EACH SM AND HIGHER-LEVEL CONTROL DEVICE

S404
CLOSE BYPASS SWITCH OF INITIAL CHARGE RESISTOR

S405
TRANSMIT DB SIGNAL TO EACH SM AND CHARGE CAPACITOR VOLTAGE UP TO 1 PU BY SWITCHING CONTROL

S406
START CONTROL OF ACTIVE POWER AND REACTIVE POWER AND RAISE OUTPUT CURRENT IN RAMP MANNER

END

FIG.16

STOP PROCESS

( START )

S410

LOWER OUTPUT CURRENT IN RAMP MANNER

S411

TRANSMIT GB SIGNAL TO EACH SM

S412

OPEN AC CIRCUIT BREAKER

S413

CONFIRM DISCHARGE OF CAPACITOR
VOLTAGE OF EACH SM

S414

SHUT DOWN HIGHER-LEVEL CONTROL DEVICE

( END )

FIG.17 HIGHER-LEVEL
CONTROL DEVICE

S100
TRANSMIT VOLTAGE COMMAND
VALUE Vref AND CIRCULATION
CONTROL COMMAND VALUE Vz
TO EACH SM

RECEIVE Vc
FROM EACH SM

S101
CALCULATE AVERAGE VALUE ⟨Vc⟩
OF Vc OF ALL SMS

S102
OV0 < ⟨Vc⟩ ≤ OV1?

YES

NO

S1021
CALCULATE MAXIMUM VALUE
Vcmax OF Vc OF ALL SMS

S104
OV1 < ⟨Vc⟩?

NO

YES

S1022
Vcmax − ⟨Vc⟩ < Vth0?

YES

NO

S1041
CALCULATE MAXIMUM VALUE
Vcmax OF Vc OF ALL SMS

S1023
NOT EXECUTE GB TO ALLOW
FAILED SM HAVING Vcmax TO
TURN ON BPS

S1042
Vcmax − ⟨Vc⟩ < Vth1?

YES

NO

S103
SHORT-TIME
GB PROCESS

S1043
NOT EXECUTE GB TO ALLOW
FAILED SM HAVING Vcmax TO
TURN ON BPS

S105
LONG-TIME GB
PROCESS (OV)

S107
YES
TRANSMIT BPS TURN-ON
WAIT SIGNAL

S106
HAS SEROUS
FAILURE OCCURRED?

NO

YES

S108
OPEN AC CIRCUIT BREAKER
AND STOP POWER
CONVERSION DEVICE

END

35

## INTERNATIONAL SEARCH REPORT

| International application No. |
| --- |
| **PCT/JP2022/042266** |

**A. CLASSIFICATION OF SUBJECT MATTER**

*H02M 7/48*(2007.01)i; *H02M 7/49*(2007.01)i
FI:  H02M7/48 M; H02M7/49

According to International Patent Classification (IPC) or to both national classification and IPC

**B. FIELDS SEARCHED**

Minimum documentation searched (classification system followed by classification symbols)

H02M7/48; H02M7/49

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2018/193606 A1 (TOSHIBA MITSUBISHI-ELECTRIC INDUSTRIAL SYSTEMS CORP.) 25 October 2018 (2018-10-25)<br>paragraphs 1-82, fig. 1-8 | 1-14 |
| A | JP 6599071 B1 (MITSUBISHI ELECTRIC CORP.) 30 October 2019 (2019-10-30)<br>paragraphs 1-113, fig. 1-11 | 1-14 |
| A | JP 5985089 B1 (MITSUBISHI ELECTRIC CORP.) 06 September 2016 (2016-09-06)<br>paragraphs 1-99, fig. 1-13 | 1–14 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **26 December 2022** | **10 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/042266**

| Patent document cited in search report | | | Publication date (day/month/year) | Patent family member(s) | | | Publication date (day/month/year) |
|---|---|---|---|---|---|---|---|
| WO | 2018/193606 | A1 | 25 October 2018 | US | 2020/0119659 | A1 | |
| | | | | paragraphs 1-89, fig. 1-8 | | | |
| | | | | EP | 3614553 | A1 | |
| JP | 6599071 | B1 | 30 October 2019 | EP | 3952098 | A1 | |
| | | | | paragraphs 1-113, fig. 1-11 | | | |
| | | | | WO | 2020/202468 | A1 | |
| JP | 5985089 | B1 | 06 September 2016 | US | 2018/0159316 | A1 | |
| | | | | paragraphs 1-116, fig. 1-13 | | | |
| | | | | WO | 2016/207976 | A1 | |
| | | | | EP | 3316430 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019022313 A
- JP 2017175740 A

- JP 2019213382 A